# EUROPEAN PATENT SPECIFICATION

(11) **EP 1 739 820 B1**
(45) Date of publication and mention of the grant of the patent: **03.06.2009**
(21) Application number: 05726628.0
(22) Date of filing: 17.03.2005
(51) Int. Cl.: H02N 2/00, H01L 41/04, G04C 3/12

(54) **APPARATUS, METHOD AND PROGRAM FOR DRIVING A PIEZOELECTRIC ACTUATOR AND ELECTRONIC DEVICE COMPRISING THE SAME**
VORRICHTUNG, METHODE UND PROGRAMM ZUR ANSTEUERUNG EINES PIEZOELEKTRISCHEN AKTORS UND ELEKTRONISCHES BAUELEMENT MIT EINEM SOLCHEN
DISPOSITIF, PROCÉDÉ ET PROGRAMME DE PILOTAGE D'UN ACTIONNEUR PIÉZOÉLECTRIQUE ET DISPOSITIF ÉLECTRONIQUE COMPORTANT UN TEL ACTIONNEUR

(30) Priority: 17.03.2004 JP 2004076507
(43) Date of publication of application: 03.01.2007
(73) Proprietor: Seiko Epson Corporation, Shinjuku-ku Tokyo 163-0811 (JP)
(72) Inventor: YAMAZAKI, Yutaka, a-shi Nagano 3928502 (JP); KAWAGUCHI, Takashi, a-shi Nagano 3928502 (JP)
(74) Representative: Cloughley, Peter Andrew
(86) International application number: PCT/JP2005/004768
(87) International publication number: WO 2005/088823

(56) References cited:
- JP-A- 5 184 171
- JP-A- 7 322 651
- US-A- 5 495 152
- US-A- 5 612 598

## Description

### FIELD OF THE INVENTION

The present invention relates to an apparatus for driving a piezoelectric actuator, an electronic device, a drive method for the electronic device, a drive control program for the electronic device, and a recording medium for recording this program.

### BACKGROUND ART

Piezoelectric elements have an excellent conversion ratio of electrical energy to mechanical energy, and excellent responsiveness. Various piezoelectric actuators that utilize the piezoelectric effects of piezoelectric elements have therefore been recently developed.
These piezoelectric actuators have as their primary constituent element a vibrator having a piezoelectric element, wherein the vibrator is composed, for example, of a rectangular reinforcing plate having a protrusion that contacts a driven body on one end thereof, piezoelectric elements affixed to both sides of the reinforcing plate, drive electrodes provided on the surfaces of these piezoelectric elements, and detection electrodes that are electrically insulated from the drive electrodes. An apparatus for driving a piezoelectric actuator is also known whereby a prescribed alternating current is applied to the drive electrodes of the vibrator, the vibrator is excited by longitudinal vibrations that cause the vibrator to expand and contract in the longitudinal direction, and bending vibrations are induced whereby the vibrator oscillates in the direction orthogonal to the direction of the longitudinal vibrations (see Prior Art 1, for example).

With the drive control performed by this type of drive apparatus, a piezoelectric actuator rotates so that the protrusion of the vibrator traces an elliptical orbit, and drives the driven body that is in contact with the protrusion. An alternating current voltage having the optimum oscillation frequency for the selected design must be applied to the vibrator of the piezoelectric actuator, and the prescribed longitudinal vibration and bending vibration must be generated therein in order for the driven body to be driven at high efficiency. However, it is difficult to continually apply the optimum drive frequency in terms of design due to the effects of the circuit characteristics of the drive apparatus, the temperature, the drive torque, and the like. Feedback control is therefore implemented in this drive apparatus whereby a detection signal from detection electrodes provided to the piezoelectric elements is detected, and the drive frequency of the alternating current voltage applied to the drive electrodes is adjusted based on the detection signal.

Specifically, it is known that the phase difference between the phase of the alternating current voltage applied to the drive electrodes and the phase of the detection signal detected from the detection electrodes, or the phase difference among the detection signals detected from a plurality of detection electrodes, is dependent upon the drive frequency of the alternating current voltage applied to the drive electrodes. In view of this, in this drive apparatus, the phase difference corresponding to the optimum drive frequency that the piezoelectric actuator is designed for is set in advance as a reference phase difference, and the drive frequency of the alternating current voltage applied to the drive electrodes is adjusted so that the detected phase difference is brought closer to the preset reference phase difference. Implementing such feedback control makes it possible to apply an alternating current voltage with the optimum drive frequency for the vibrator of the piezoelectric actuator, and also makes it possible to excite the piezoelectric actuator with the prescribed longitudinal vibrations and bending vibrations and to drive the driven body with high efficiency.

However, in the drive apparatus in Prior Art 1, since feedback control is implemented based on the detection signal detected from the detection electrodes, there is a possibility that a regular detection signal cannot be obtained and the drive frequency cannot be appropriately adjusted in cases such those in which driving of the piezoelectric actuator fails to initiate (start up) for any reason, or when an abnormal driving state occurs during driving.
A drive control method that allows such circumstances to be avoided and a piezoelectric actuator to be driven is known. In this method, the drive frequency of the drive signal is returned to its initial value when the piezoelectric actuator has failed to start up or an abnormal driving state has been detected, and the drive signal is transmitted while the drive frequency is sequentially varied (swept) until the drive frequency changes from this initial value and reaches the optimum frequency (for example, see Prior Art 2).
According to this drive control method, if the piezoelectric actuator is started up and the driven body to be driven is not detected as being driven, the drive frequency is returned to its initial high value and is re-swept in the direction of lower frequencies, whereby the drive frequency of the drive signal can be made to coincide with the optimum drive frequency.
Prior Art 1: International Publication No. 02/078165 Pamphlet
Prior Art 2: Japanese Patent Application Laid-Open No. 6-6990
US 5,612,598 and US 5,495,152 disclose control of frequency scanning for driving piezoelectric actuator based on one or two threshold values of the measured supply voltage.

### DISCLOSURE OF THE INVENTION

### PROBLEMS THE INVENTION IS INTENDED TO SOLVE

However, in the drive control method in Prior Art 2, whether or not the piezoelectric actuator has started up in the regular manner is determined by detecting the driving of the driven body. Therefore, a drive signal with an inefficient (less than optimal) drive frequency must continue to be applied until the driving of the driven body is detected, even if the actuator fails to start up. Therefore, failure of the piezoelectric actuator to start up results in problems in that time is required to determine whether another sweeping is to be initiated, and a large amount of electricity is consumed.

An object of the present invention is to provide an apparatus for driving a piezoelectric actuator that can optimize the drive signal rapidly and with less electricity, an electronic device, a drive method thereof, a drive control program thereof, and a recording medium for recording this program.

### MEANS FOR SOLVING THESE PROBLEMS

The apparatus for driving a piezoelectric actuator according to the present invention is an apparatus for driving a piezoelectric actuator having a vibrator that vibrates due to the application of a drive signal having a prescribed drive frequency to a piezoelectric element, wherein the apparatus is characterized in having drive means for supplying the drive signal to a piezoelectric element of the vibrator; vibration detecting means for detecting the vibration of the vibrator and outputting a detected detection signal; drive frequency variation means for varying the drive frequency of the drive signal so that the vibrating state of the vibrator detected from the detection signal is brought closer to a reference vibrating state; voltage detecting means for detecting at least one type of voltage selected from the power source voltage and the drive voltage of the piezoelectric actuator; and control means for causing the drive frequency variation means to vary the drive frequency so that the drive frequency of the drive signal is increased or reduced from the prescribed drive frequency, and returning the drive frequency to the prescribed drive frequency and then again varying the drive frequency on the basis of the voltage reduction rate detected by the voltage detecting means when the reduction rate is greater than a preset reference reduction rate.

At least one of the reduction rates selected from the reduction rate of the power source voltage and the reduction rate of the drive voltage of the piezoelectric actuator may be calculated based on either the time elapsed since the start of the drive frequency varying process, or on the number of variations made in the varying process. Specifically, the term "reduction rate" refers to the rate calculated by dividing the amount by which the power source voltage or the drive voltage has decreased, by the time elapsed or the number of variations made during this decrease.
Also, the drive voltage of the piezoelectric actuator may be the same voltage as the power source voltage supplied directly from the power source, a voltage increased by means of a booster circuit provided between the power source and the piezoelectric actuator, or a voltage reduced by means of a voltage reducing circuit.

According to the present invention, when the reduction rate of the power source voltage or the drive voltage is greater than the reference reduction rate, i.e., when either the actuator is driven at a drive frequency with low driving efficiency and high power consumption or the actuator cannot be started up for any reason, the piezoelectric actuator can be restarted by returning the drive frequency to the prescribed drive frequency and varying (sweeping) the drive frequency one more time.
Therefore, the time needed to detect startup failure is not extended as in conventional drive control methods. In cases such as those in which the piezoelectric actuator has failed to start up, the startup failure can be immediately determined based on the reduction rate of the power source voltage or the drive voltage, and less time is needed to make this determination. Therefore, the process beginning with detecting abnormalities and ending with optimizing the drive signal can be conducted rapidly, and the amount of power consumed can be reduced to conserve energy.
Also, the drive frequency of the drive signal sometimes deviates from the optimum drive frequency for many different reasons (temperature, drive torque, etc.) during driving, even when the piezoelectric actuator has successfully started up. In such cases, a large decrease in the drive efficiency due to the deviation from the optimum drive frequency results in a greater reduction rate of the power source voltage or the drive voltage. Performing another sweep based on this reduction rate therefore makes it possible to restart the piezoelectric actuator and to bring the drive signal into agreement with the optimum drive frequency.

In the apparatus for driving a piezoelectric actuator according to the present invention, it is preferable that the reference reduction rate be set based on the required startup time of the piezoelectric actuator, and that the control means cause the drive frequency variation means to vary the drive frequency based on at least one reduction rate selected from the reduction rate of the power source voltage and the reduction rate of the drive voltage of the piezoelectric actuator when the piezoelectric actuator begins to be driven.
The term "required startup time of the piezoelectric actuator" refers to the time from the moment the drive signal is applied to the piezoelectric actuator until the moment the driven body begins to be driven (rotated), and this startup time can be set in advance based on tests or experiments.
The startup time may be defined as the time needed to reach the driving speed (rotation speed) required by the design of the apparatus in accordance with the vibration characteristics of the individual piezoelectric actuator and the resistance (rotation torque and the like) imposed by the driven body. The reference reduction rate may be set based on the startup time thus defined. Furthermore, the startup time may otherwise be defined as the time needed for the driven body to reach the prescribed driving state (rotation speed and other factors).
According to this configuration, setting the reference reduction rate on the basis of the required startup time of the piezoelectric actuator makes it possible to determine whether the piezoelectric actuator will succeed in starting up with a high degree of precision, and to further reduce the time needed to conduct another sweep when startup fails.
Furthermore, if the startup time of the piezoelectric actuator is set to the time elapsed from the moment the drive signal is applied until the moment the driven body begins to be driven, then it is possible to avoid circumstances in which the drive signal continues to be applied at a frequency at which driving does not initiate, and to further reduce power consumption even in cases such those in which the power source voltage or the drive voltage rapidly decreases.

Also, in the apparatus for driving a piezoelectric actuator according to the present invention, it is preferable that the drive frequency variation means have phase difference detection means for detecting the phase difference between the drive signal and the detection signal, and comparison means for comparing the phase difference with a preset target phase difference, and that the drive frequency of the drive signal be varied based on the results of this comparison so that the phase difference is brought closer to the target phase difference.
According to this configuration, the drive frequency can be varied rapidly because feedback control is implemented by the drive frequency variation means on the basis of the comparison between the phase difference detected by the phase difference detection means and the target phase difference. Specifically, as previously described, the dependence of the drive frequency of the drive voltage and the phase difference between the drive signal and the detection signal is known, and this dependence varies from a large phase difference (near 180°, for example) to a small phase difference (near 0°, for example) within a drive frequency range that lies on both sides of the resonance frequency. Therefore, it is possible to immediately determine whether to increase or reduce the drive frequency on the basis of the size of the phase difference and the target phase difference, and the speed of control can be increased.

In the apparatus for driving a piezoelectric actuator according to the present invention, it is preferable that the control means cause the drive frequency variation means to vary the drive frequency by using as the starting frequency a frequency that is higher than the frequency need to achieve the target vibrating state.
The term "frequency that is higher than the frequency need to achieve the target vibrating state" herein refers to a frequency that is higher than the optimal drive frequency. When this high frequency is used as the starting frequency, and the frequency is swept from the starting frequency towards lower frequencies, this frequency can be appropriately set in a range in which the optimal drive frequency can be matched, even taking errors into consideration caused by the effects of the characteristics of the piezoelectric actuator, the circuit characteristics, temperature and other environmental factors, and the like.
According to this configuration, it is possible to match the optimal drive frequency while reducing power consumption by moving (sweeping) the drive frequency towards lower frequencies from the starting frequency, which is higher than the frequency needed to achieve the target vibrating state. Specifically, it is known that in this piezoelectric actuator, an extremely large amount of power is consumed at then resonance frequency, and the driving efficiency is increased by driving the actuator at a drive frequency slightly higher than the resonance frequency. Therefore, power consumption can be reduced by initiating a sweep from high frequencies. This is because a sweep from low frequencies to high frequencies will pass through the resonance frequency, but a sweep from high frequencies to low frequencies will not pass through the resonance frequency.

Furthermore, in the apparatus for driving a piezoelectric actuator according to the present invention, it is preferable that the control means have a timer for measuring the time needed for at least one type of voltage selected from the power source voltage and the drive voltage of the piezoelectric actuator to drop below a preset drive stop voltage, and that the control means determine that the reduction rate is greater than the reference reduction rate when the time measured by this timer is shorter than the preset reference time.
According to this configuration, it is possible to immediately calculate the reduction rate of the power source voltage or the drive voltage from the time needed for either voltage to drop below the drive stop voltage as measured by the timer, and the relationship between the power source voltage or drive voltage as determined by the voltage detection means and the drive stop voltage. It is also possible to rapidly determine whether to restart the piezoelectric actuator.

Also, in the apparatus for driving a piezoelectric actuator according to the present invention, it is preferable that the drive frequency variation means have an up/down counter and vary the drive frequency of the drive signal on the basis of the count of this up/down counter, and that the control means initialize the count of the up/down counter and vary the drive frequency one more time when the control means determines that the reduction rate of at least one type of voltage selected from the power source voltage and the drive voltage of the piezoelectric actuator is greater than the reference reduction rate.
Also, the drive frequency variation means may have an integrating circuit and may vary the drive frequency of the drive signal on the basis of the output value of this integrating circuit, and the control means may initialize the output value of the integrating circuit and vary the drive frequency one more time when the control means determines that the reduction rate of at least one type of voltage selected from the power source voltage and the drive voltage of the piezoelectric actuator is greater than the reference reduction rate.
According to this configuration, the drive frequency can be returned to the prescribed drive frequency, which is the initial value, and the piezoelectric actuator can be restarted, whereby drive control can easily be implemented and the control circuits and the like given a simple structure, by sweeping the drive frequency of the drive signal on the basis of the count of the up/down counter or the output value of the integrating circuit, and initializing (resetting) the count (output value).

The electronic device of the present invention is characterized by including any of the above-described drive apparatuses for a piezoelectric actuators, a piezoelectric actuator driven by this apparatus, and a power source.
It is preferable that the electronic device of the present invention be an electronic timepiece that includes a date display mechanism driven by the piezoelectric actuator.
According to this configuration, when the date display mechanism of the electronic device is driven, the same effects as those previously described can be achieved, and a reduction in the size and thickness of an electronic timepiece having this piezoelectric actuator can be facilitated. The date display mechanism driven by the piezoelectric actuator is not constantly driven, but can be driven for a limited time or by a prescribed amount (of rotation) within one day. Therefore, the drive control of the present invention is suitable for appropriately driving the piezoelectric actuator when driving is initiated.
Also, in a wristwatch or another such portable electronic timepiece, the effects of reducing power consumption are more pronounced because the size (capacity) of the battery or secondary battery as the power source is limited. Particularly, since the power source voltage or the drive voltage of the piezoelectric actuator tends to decrease in the final stages of discharge of a secondary battery, the piezoelectric actuator can be reliably driven by restarting the device on the basis of the voltage reduction rate.

The method for driving an electronic device according to the present invention is a method for driving an electronic device comprising a piezoelectric actuator having a vibrator that vibrates due to the application of a drive signal of a prescribed drive frequency to a piezoelectric element, and a power source that supplies electricity to the piezoelectric element of the vibrator, wherein the method is characterized in including a vibration detection step for detecting the vibration of the vibrator and outputting a detected detection signal, a voltage detection step for detecting at least one type of voltage selected from the power source voltage and the drive voltage of the piezoelectric actuator, a drive frequency varying step for increasing or reducing the drive frequency of the drive signal from the prescribed drive frequency so that the vibrating state of the vibrator as detected from the detection signal is brought closer to the target vibrating state, and a control step for returning the drive frequency to the prescribed drive frequency and conducting another drive frequency varying step on the basis of the voltage reduction rate as detected in the voltage detection step when the reduction rate is greater than a preset reference reduction rate.

Furthermore, the method for driving a piezoelectric actuator may be a method for driving a piezoelectric actuator having a vibrator that vibrates due to the application of a drive signal of a prescribed drive frequency to a piezoelectric element through the use of drive means for supplying the drive signal to the piezoelectric element of the vibrator. The method may include a vibration detection step for detecting the vibration of the vibrator and outputting a detected detection signal, a voltage detection step for detecting at least one type of voltage selected from the power source voltage and the drive voltage of the piezoelectric actuator, a drive frequency varying step for increasing or reducing the drive frequency of the drive signal from the prescribed drive frequency so that the vibrating state of the vibrator as detected from the detection signal is brought closer to the target vibrating state, and a control step for returning the drive frequency to the prescribed drive frequency and conducting another drive frequency varying step on the basis of the voltage reduction rate as detected in the voltage detection step when the reduction rate is greater than a preset reference reduction rate.

According to the present invention, the process beginning with detecting abnormalities and ending with optimizing the drive signal can be conducted rapidly, and the amount of power consumed can be reduced to conserve energy in the same manner as in the above-described drive apparatus.

Also, the drive control program for an electronic device drive method according to the present invention is a drive control program for an electronic device for controlling the driving of as electronic device that includes a piezoelectric actuator having a vibrator that vibrates due to the application of a drive signal of a prescribed drive frequency to a piezoelectric element, and a power source that supplies electricity to the piezoelectric element of the vibrator, wherein the program is characterized in that a computer is made to function at least as control means selected from drive means for supplying the drive signal to the piezoelectric element of the vibrator, vibration detection means for detecting the vibration of the vibrator and outputting a detected detection signal, drive frequency variation means for varying the drive frequency of the drive signal so that the vibrating state of the vibrator as detected from the detection signal is brought closer to the target vibrating state, voltage detection means for detecting at least one type of voltage selected from the power source voltage and the drive voltage of the piezoelectric actuator, and control means for causing the drive frequency variation means to vary the drive frequency so that the drive frequency of the drive signal is increased or reduced from the prescribed drive frequency, and returning the drive frequency to the prescribed drive frequency and conducting another drive frequency varying step on the basis of the voltage reduction rate as detected by the voltage detection means when the reduction rate is greater than a preset reference reduction rate.

Furthermore, the drive control program for a piezoelectric actuator may be a drive control program for a piezoelectric actuator for controlling the driving of a piezoelectric actuator having a vibrator that vibrates due to the application of a drive signal of a prescribed drive frequency to a piezoelectric element. A program may be used wherein a computer is made to function at least as control means selected from drive means for supplying the drive signal to the piezoelectric element of the vibrator, vibration detection means for detecting the vibration of the vibrator and outputting a detected detection signal, drive frequency variation means for varying the drive frequency of the drive signal so that the vibrating state of the vibrator as detected from the detection signal is brought closer to the target vibrating state, voltage detection means for detecting at least one type of voltage selected from the power source voltage and the drive voltage of the piezoelectric actuator, and control means for causing the drive frequency variation means to vary the drive frequency so that the drive frequency of the drive signal is increased or reduced from the prescribed drive frequency, and returning the drive frequency to the prescribed drive frequency and conducting another drive frequency varying step on the basis of the voltage reduction rate as detected by the voltage detection means when the reduction rate is greater than a preset reference reduction rate.

According to the present invention, a computer is made to function as some or all of the means selected from drive means, vibration detection means, phase difference detection means, drive frequency variation means, voltage detection means, and control means as drive control means of an electronic device, whereby the process beginning with detecting abnormalities and ending with optimizing the drive signal can be conducted rapidly, and the amount of power consumed can be reduced to conserve energy in the same manner as in the above-described drive apparatus.

It is preferable that the recording medium of the present invention record the drive control program for the electronic device, or the drive control program for a piezoelectric actuator, in a manner that allows the program to be read by a computer.
According to this configuration, if the drive control program for the piezoelectric actuator or the electronic device is modified or improved, the program can be easily read by a computer and the program can be updated.

### EFFECTS OF THE INVENTION

According to the invention as described above, it is possible to provide an apparatus for driving a piezoelectric actuator wherein the drive signal can be optimized rapidly and with less power consumption, an electronic device, a drive method thereof, a drive control program thereof, and a recording medium for recording this program.

### BRIEF DESCRIPTION OF THE DRAWINGS

FIG. 1 is a diagram showing the schematic configuration of an electronic device according to the first embodiment of the present invention;
FIG. 2 is a plan view showing the detailed configuration of a date display mechanism in the electronic device;
FIG. 3 is a diagram showing the vibrating state in the piezoelectric actuator according to the present invention;
FIG. 4 is a block diagram showing the drive control apparatus of the present invention;
FIG. 5 is a flowchart showing the drive control method of the piezoelectric actuator;
FIG. 6 is a flowchart showing part of the drive control method;
FIG. 7 is a timing chart showing the operation of the drive control apparatus;
FIG. 8 is a diagram showing the schematic configuration of the electronic device according to the second embodiment of the present invention;
FIG. 9 is a timing chart showing the operation of the electronic device;
FIG. 10 is a perspective view showing the electronic device according to the third embodiment of the present invention; and
FIG. 11 is a detailed structural view showing the digit display unit in the electronic device.

### KEY

1: electronic timepiece (electronic device), 9: secondary battery (power source), 10: date display mechanism, 12: vibrator, 100, 100A: drive control apparatus (drive control circuit), 110: driver (drive means), 120: drive frequency variation means, 123: phase difference/DC conversion circuit (phase difference detecting means), 124: phase difference comparison circuit (comparison means), 126: up/down counter, 130: control means, 131: control circuit, 132: timer, A: piezoelectric actuator (drive means)

### BEST MODE FOR CARRYING OUT THE INVENTION

### [1. First Embodiment]

The first embodiment of the present invention will now be described with reference to the diagrams.
In the second and subsequent embodiments hereinafter described, identical components and components having similar functions to those of the first embodiment described below are denoted by the same symbols, and descriptions thereof are simplified or omitted.

### [1-1. Entire Configuration]

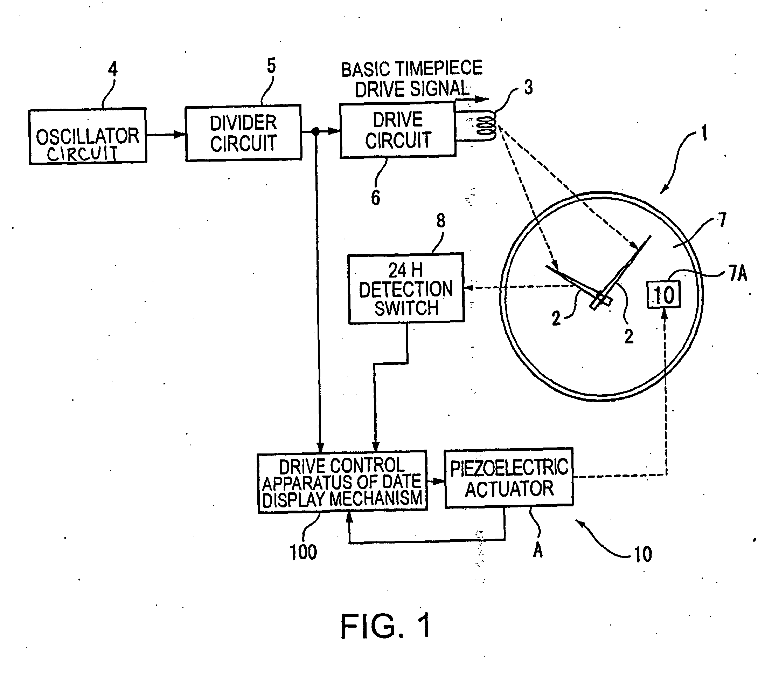

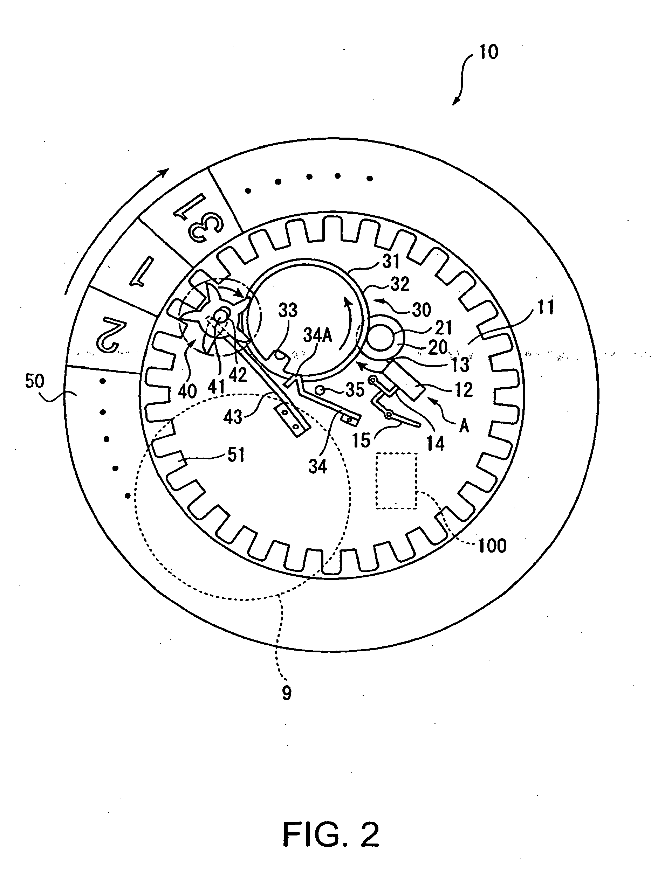

FIG. 1 is a diagram showing the schematic configuration of an electronic timepiece 1 as the electronic device in the present embodiment. FIG. 2 is a plan view showing the detailed configuration of a date display mechanism 10 in the electronic timepiece 1.
As shown in FIG. 1, the electronic timepiece 1 is a wristwatch that has pointers 2 for displaying the time, and a stepping motor 3 for driving the pointers 2. The driving of the stepping motor 3 is controlled by an oscillator 4, a divider circuit 5, and a drive circuit 6. The oscillating circuit 4 has a reference oscillation source composed of a liquid crystal oscillator, and outputs a reference pulse. The divider circuit 5 inputs the reference pulse outputted from the oscillating circuit 4, and produces a standard signal (a signal of 1 Hz, for example) on the basis of the reference pulse. The drive circuit 6 generates a motor drive pulse for driving the stepping motor 3 on the basis of the reference signal outputted from the divider circuit 5.
The date display mechanism 10 of the electronic timepiece 1 has a piezoelectric actuator A and a drive control apparatus 100 for controlling the driving of the piezoelectric actuator A. A switch 8 that opens and closes by detecting the time (for example, 24 hours) of the electronic timepiece 1 acts as a trigger for the operation of the drive control apparatus 100, which drives the date display mechanism 10.

As shown in FIG. 2, the primary components of the date display mechanism 10 usually comprise a piezoelectric actuator A, a rotor 20 as the object to be rotatably driven by the piezoelectric actuator A, a deceleration gear train that decelerates and transmits the rotation of the rotor 20, and a date wheel 50 rotated by the drive force transmitted via the deceleration gear train. The deceleration gear train comprises a date turning intermediate wheel 30 and a date turning wheel 40. The piezoelectric actuator A, the rotor 20, the date turning intermediate wheel 30, and the date turning wheel 40 are supported on a bottom plate 11. The piezoelectric actuator A has a flat, thin rectangular vibrating body 12, and this vibrating body 12 is disposed so that a contact section 13 on the distal end thereof comes into contact with the outer peripheral surface of the rotor 20.

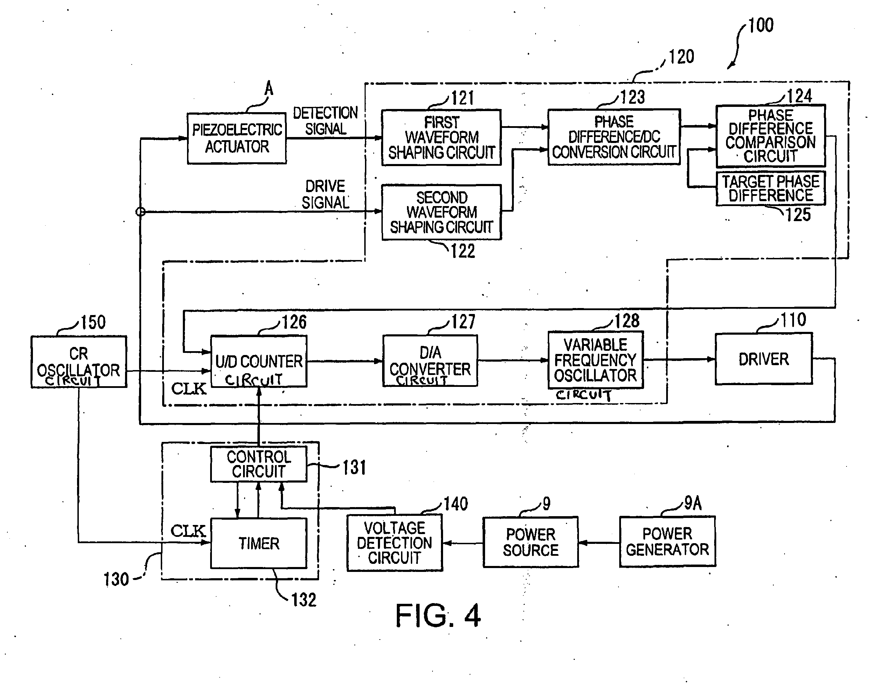

A disc-shaped dial 7 (FIG. 1) is provided at the top of the date display mechanism 10, and part of the outer peripheral surface of the dial 7 is provided with a window 7A for displaying the date, and is designed so that the date on the date wheel 50 is visible through the window 7A. Also, a pointer movement gear train or a secondary battery 9 as a power source connected to the stepping motor 3 for driving the pointers 2 is provided at the bottom (rear side) of the bottom plate 11. The secondary battery 9 is charged by a power generator 9A (FIG. 4), and supplies electricity to all the circuits of the stepping motor 3, the piezoelectric actuator A, and the drive control apparatus 100. The power generator 9A generates power by utilizing solar power or the rotation of an oscillating weight, and the secondary battery 9 is charged by the generated electricity. If a solar battery that generates direct-current electricity is used as the power generator 9A, the power generator is preferably connected to the secondary battery 9 via a backflow prevention circuit, and if an oscillating weight or a mainspring that generates alternating-current electricity is used as the power generator 9A, the power generator is preferably connected to the secondary battery 9 via a rectifier circuit.
The power source is not limited to the secondary battery 9 charged by the power generator 9A, and may also be a common primary battery (for example, a lithium ion battery).

The date turning intermediate wheel 30 is configured from a large wheel 31 and a small wheel 32. The small wheel 32 has a cylindrical shape somewhat smaller than the large wheel 31, and a notch 33 with a substantial square shape is formed in the outer peripheral surface thereof. The small wheel 32 is fixed in place so as to have the same center as the large wheel 31. A gear 21 at the top of the rotor 20 meshes with the large wheel 31. Therefore, the date turning intermediate wheel 30 composed of the large wheel 31 and small wheel 32 rotates in conjunction with the rotation of the rotor 20.
A plate spring 34 is provided to the bottom plate 11 on the side of the date turning intermediate wheel 30, the proximal end of the plate spring 34 is fixed in place on the bottom plate 11, and the distal end 34A is bent into a rough V shape. The distal end 34A of the plate spring 34 is provided to be capable of going into and out of the notch 33 of the date turning intermediate wheel 30. A, contact 35 is disposed at a position near the plate spring 34, and this contact 35 is designed to come into contact with the plate spring 34 when the date turning intermediate wheel 30 rotates and the distal end 34A of the plate spring 34 goes into the notch 33. A specific voltage is applied to the plate spring 34, and when the plate spring 34 comes into contact with the contact 35, this voltage is applied to the contact 35 as well. Therefore, the state in which the date wheel is turned and the amount by which the date wheel 50 rotates in one day can be determined by determining the voltage of the contact 35.
The amount by which the date wheel 50 rotates is not limited to the use of the plate spring 34 or the contact 35, and another possibility is to utilize a component that determines the rotating state of the rotor 20 or the date turning intermediate wheel 30 and outputs specific pulse signals; i.e., a conventional photoreflector, a photointerrupter, an MR sensor, or other such various rotating encoders or the like.

The date wheel 50 has a ring shape, and an inner gear 51 is formed on the inner peripheral surface thereof. The date turning wheel 40 has a gear with five teeth, and meshes with the inner gear 51 of the date wheel 50. Also, a shaft 41 is provided in the center of the date turning wheel 40, and this shaft 41 is inserted into a through-hole 42 formed in the bottom plate 11. The through-hole 42 is formed extending along the peripheral direction of the date wheel 50. The date turning wheel 40 and the shaft 41 are urged upward and to the right in FIG. 2 by a plate spring 43 fixed on the bottom plate 11. The date wheel 50 is also prevented from oscillating by the urging action of the plate spring 43.

The vibrating body 12 of the piezoelectric actuator A is a rectangular plate having two long sides and two short sides. Also, the vibrating body 12 has a stacked structure in which a reinforcing plate made of stainless steel or the like is sandwiched between two rectangular plate-shaped piezoelectric elements. The plate has roughly the same shape as the piezoelectric elements, and is thinner than the piezoelectric elements. For the piezoelectric elements, lead zirconate titanate (PZT (trademark)), liquid crystal, lithium niobate, barium titanate, lead titanate, lead metaniobate, polyvinylidene fluoride, zinc lead niobate, scandium lead niobate, and the like can be used.
The vibrating body 12 has a contact unit 13 near the middle of one short side in the width direction. This contact unit 13 is obtained by cutting or otherwise shaping the reinforcing plate, and has a distal end with a gradually curving surface that protrudes from the piezoelectric elements. The vibrating body 12 maintains an orientation in which the distal end of the contact unit 13 is brought into contact with the outer peripheral surface of the rotor 20. A supporting member 14 and an urging member 15 are provided to the piezoelectric actuator A in order to keep the vibrating body 12 in such a position.

The supporting member 14 of the piezoelectric actuator A is formed integrally with the reinforcing plate by cutting or otherwise shaping the reinforcing plate. This supporting member 14 is an L-shaped member composed of a vertical part protruding vertically from the center of one long side of the vibrating body 12, and a horizontal part extending from the distal end of the vertical part towards the side of the rotor 20 parallel to the long sides. A pin protruding from the bottom plate 11 is inserted through the end of the horizontal part on the opposite side of the vertical part, and the supporting member 14 and the vibrating body 12 fixed thereon are capable of rotating around this pin as a rotational axis. One end of the urging member 15 is engaged near the center of the horizontal part of the supporting member 14. A pin protruding from the bottom plate 11 is inserted through the middle section of the urging member 15, which is capable of rotating around the pin as a rotational axis. Also, the end of the urging member 15 on the opposite side of the supporting member 14 engages the bottom plate 11, and the pressure with which the contact unit 13 of the vibrating body 12 is pressed against the outer peripheral surface of the rotor 20 can be adjusted by varying the position of this end.

In the configuration described above, the vibrating body 12 of the piezoelectric actuator A produces longitudinal oscillation, which is a first oscillation mode, as well as curved oscillation, which is a second oscillation mode induced by the longitudinal oscillation, as a result of a drive signal having a specific frequency being applied to the piezoelectric elements from the drive control apparatus 100, and the contact unit 13 moves while describing an elliptical arc within a plane containing the plate surface. The rotor 20 is struck on the outer peripheral surface by the contact unit 13 of the vibrating body 12, and is rotatably driven around the timepiece as shown by the arrow in FIG. 2. The rotation of the rotor 20 is transmitted to the date turning wheel 40 via the date turning intermediate wheel 30, and the date turning wheel 40 causes the date wheel 50 to rotate around the timepiece. The transmissions of force from the vibrating body 12 to the rotor 20, from the rotor 20 to the deceleration gear train (the date turning intermediate wheel 30 and the date turning wheel 40), and from the deceleration gear train to the date wheel 50 all constitute a transmission of force in a direction parallel to the surface of the bottom plate 11 of the vibrating body 12. Therefore, coils or rotors are not stacked in the thickness direction as with a stepping motor, but the vibrating body 12 and the rotor 20 are disposed in the same plane, making it possible to reduce the thickness of the date display mechanism 10. Since the date display mechanism 10 can be made thinner, the entire electronic timepiece 1 can also be made thinner as well.

### [1-2. Configuration of the drive control apparatus of the piezoelectric actuator A]

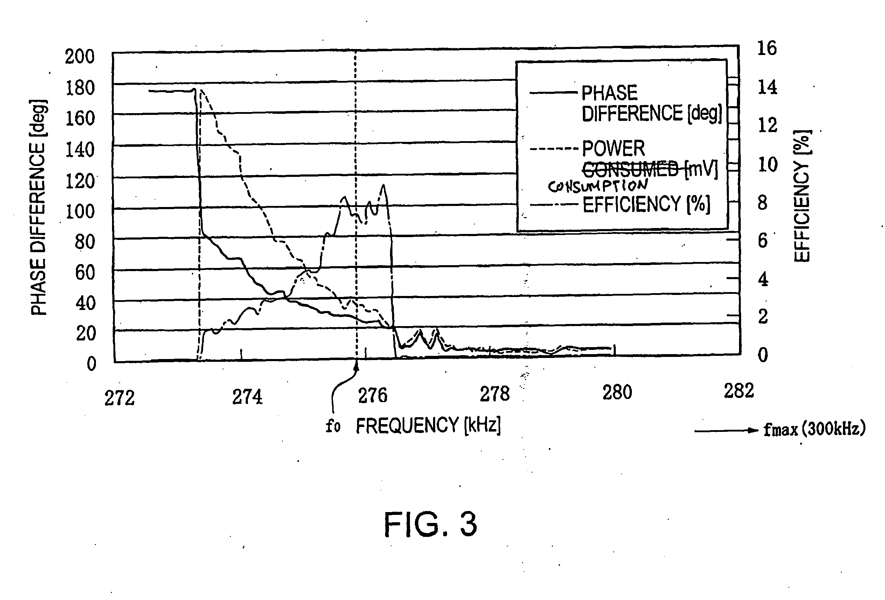

First, before the configuration of the drive control apparatus 100 is described, the relationship between the vibrating state of the vibrator 12 and the drive frequency of the drive signal applied will be described with reference to FIG. 3.
FIG. 3 is a diagram showing the relationship between the vibrating state (the phase difference between the detection signal and the drive voltage signal, the power consumed by the piezoelectric actuator A, and the drive efficiency) of the vibrator 12 and the drive frequency of the drive voltage signal. The detection signal is a signal obtained from a vibration detecting electrode (piezoelectric element) as vibration detecting means disposed on the piezoelectric element of the vibrator 12, and indicates that the vibrator 12 is vibrating. In this diagram, the phase difference as indicated by the solid line, and the power consumed as indicated by the dashed line both decrease as the drive frequency of the drive voltage increases, and the drive efficiency indicated by the single dashed line peaks at a specified drive frequency (a frequency near 276 kHz in the present embodiment). Specifically, it is clear that the drive efficiency of the piezoelectric actuator A depends on the drive frequency of the drive voltage, and that an optimal drive frequency (optimal drive frequency f0, the frequency needed to achieve the target vibrating state) with a superior drive efficiency can be attained.
When the piezoelectric actuator A is driven at a drive frequency less than the optimal drive frequency f0, power consumption increases rapidly, the drive efficiency decreases significantly, the frequency deviates from the optimal drive frequency f0 (in the diagram, the frequency is either less than 274 kHz or greater than 276.5 kHz), and the drive efficiency falls to 0 (zero). Specifically, the piezoelectric actuator A either cannot be driven, or it does not operate as designed despite being driven.
The numerical values in the graph in FIG. 3 merely exemplify measured values pertaining to a specific piezoelectric actuator A, and these values do not limit the drive frequency of the drive voltage signal, the phase difference, the power consumption, the drive efficiency, or any other such factors of the piezoelectric actuator A of the present invention.

Next, the drive control apparatus of the present invention will be described with reference to FIG. 4.
The drive control apparatus 100 of the present embodiment is mounted as a circuit on an IC chip. The apparatus sets the phase difference that produces the optimal drive frequency f0 as the target phase difference on the basis of the relationship between the vibrating state of the vibrator 12 and the drive frequency of the drive signal described above, and also controls the feedback of the piezoelectric actuator A by varying the drive frequency of the drive voltage signal applied to the vibrator 12 so that the phase difference detected during driving is brought closer to the target phase difference. The drive control apparatus 100 also sequentially reduces the frequency from a level (initial frequency fmax) that is significantly higher than the optimal drive frequency f0 as the piezoelectric actuator A is driven, achieving sweeping control whereby the drive frequency of the drive voltage signal is brought to the optimal drive frequency f0.

FIG. 4 is a block diagram showing the drive control apparatus 100 of the present embodiment.
As shown in FIG. 4, the drive control apparatus 100 that controls the driving of the piezoelectric actuator A includes a driver 110 as drive means for transmitting a drive signal to the piezoelectric actuator A, drive frequency variation means 120 that inputs a detection signal from the piezoelectric actuator A and a drive signal from the driver 110 to vary the drive frequency of the drive signal, control means 130 for controlling the operation of the drive frequency variation means 120, and a voltage detection circuit 140 as voltage detection means for detecting the power source voltage supplied from the secondary battery 9. In FIG. 4, a CR generator circuit 150, which outputs a basic clock drive signal (CLK) for the electronic timepiece 1 to the drive frequency variation means 120 and the control means 130, is identical to the oscillating circuit 4.

The drive frequency variation means 120 includes first and second waveform shaping circuits 121 and 122, a phase difference/DC conversion circuit 123 as phase difference detection means, a phase difference comparison circuit 124 as comparison means, an up/down counter 126, a D/A converter 127, and a variable frequency oscillator 128. Specifically, the drive frequency variation means 120 detects the drive signal outputted from the driver 110 to the vibrator 12 as well as the detection signal outputted from the vibration detecting electrode by the vibration of the vibrator 12 as a result of the drive signal being applied to the drive electrode of the vibrator 12, determines the phase difference between the drive signal and the detection signal, then compares the determined phase difference with the target phase difference that is set based on the optimal drive frequency f0, varies the drive frequency of the drive signal on the basis of the comparison results, and outputs the varied drive frequency signal to the driver 110. The driver 110 is electrically connected to the drive electrode of the vibrator 12, and is a circuit that amplifies the output signal outputted from the variable frequency oscillator 128 and applies the drive signal to the drive electrode of the vibrator 12.

The first and second waveform shaping circuits 121 and 122 are electrically connected to the driver 110 and the vibration detecting electrode of the vibrator 12, respectively, and are circuits that input the drive signal outputted from the driver 110 and the detection signal outputted from the vibration detecting electrode, shape the waveform of the drive signal and the detection signal, and output the shaped drive signal and detection signal to the phase difference/DC conversion circuit 123.
The phase difference/DC conversion circuit 123 is a circuit that outputs a signal according to the phase difference between the drive signal and detection signal shaped by the waveform shaping circuits 121 and 122. The phase difference/DC conversion circuit 123 includes a phase difference determination unit and a voltage-averaging unit (neither are shown). The phase difference determination unit generates phase difference signals whose pulse widths are equivalent to the phase difference of the drive signal and the detection signal, and outputs these phase difference signals to the voltage-averaging unit. The voltage-averaging unit generates takes the average of the phase difference signals outputted from the phase difference determination unit, and outputs phase difference signals proportionate to the phase difference of the drive signal and the detection signal to the phase difference comparison circuit 124.

The phase difference comparison circuit 124 compares the voltage value of the phase difference signal outputted from the phase difference/DC conversion circuit 123 with the comparison voltage value equivalent to the target phase difference 125 set based on the optimal drive frequency f0, and outputs comparison information pertaining to these comparison results to the up/down counter 126. The phase difference comparison circuit 124 is configured, for example, from a comparator or the like, and the circuit outputs a high level signal (H) as comparison information to the up/down counter 126 when the voltage value of the phase difference signal is equal to or less than the comparison voltage value. A low level signal (L) as comparison information is outputted to the up/down counter 126 when the voltage value of the phase difference signal is greater than the comparison voltage value. Drive control is thereby achieved, whereby the drive frequency of the drive signal outputted from the driver 110 is locked near the optimal drive frequency f0 that the actuator is designed for.

The up/down counter 126 is a circuit that causes the variable frequency oscillator 128 to vary the drive frequency of the drive signal on the basis of the comparison information (H or L signals) outputted from the phase difference comparison circuit 124. The counter includes two AND gates (not shown). These AND gates input the comparison information signals (H or L) outputted from the phase difference comparison circuit 124 and the CLK signals produced from the CR generator circuit 150, and implement up-counting input if the comparison information is a high-level signal (H) or down-counting input if the comparison information is a low-level signal (L) in accordance with the input timing of the CLK signals. The up/down counter 126 is configured from a 12 bit counter or the like, for example, and increases or decreases the count according to the up-counting input or down-counting input from the AND gates and outputs the 12 bit count to the D/A converter 127.

The D/A converter 127 has an internally set frequency control voltage value that corresponds to the count of the up/down counter 126. The D/A converter 127 outputs to the variable frequency oscillator 128 a frequency control voltage signal equivalent to the frequency control voltage value that corresponds to the count when the count outputted from the up/down counter 126 is inputted.
The variable frequency oscillator 128 oscillates at a frequency corresponding to the frequency control voltage signal outputted from the D/A converter 127, and outputs this signal to the driver 110. The driver 110 then applies to the drive electrode of the vibrator 12 a drive signal whose frequency is correlated with the output signal outputted from the variable frequency oscillator 128.

The control means 130 controls the varying of the drive frequency of the drive signal by the drive frequency variation means 120 on the basis of the power source voltage detected by the voltage detection circuit 140. Specifically, the control means 130 implements two types of control: sweep control in the process of starting up the piezoelectric actuator A, and intermittent drive control of the piezoelectric actuator A, described later.
The control means 130 includes a control circuit 131 and a timer 132. The timer 132 inputs the CLK signal produced by the CR generator circuit 150 and outputs time information to the control circuit 131 according to the CLK signal. The control circuit 131 outputs a command to reset the time information to the timer 132 during sweep control or intermittent drive control. A power source voltage signal from the voltage detection circuit 140 is inputted to the control circuit 131, and the control circuit 131 detects the power source voltage value of the secondary battery 9 on the basis of this power source voltage signal.

The control circuit 131 outputs a control signal to the up/down counter 126 or the driver 110 on the basis of the power source voltage signal from the voltage detection circuit 140 and the time information from the timer 132. Specifically, when sweep control of the piezoelectric actuator A is implemented, the control circuit 131 outputs an initializing signal to the up/down counter 126, the count is reset to 0, and the drive frequency of the drive signal is initialized at the initial frequency fmax. When intermittent.drive control of the piezoelectric actuator A is implemented, the control circuit 131 outputs a stop signal or a restart signal to the driver 110, and the output of drive signals from the driver 110 to the piezoelectric actuator A is stopped or restarted.
Since such control by the control circuit 131 is implemented based on the power source voltage, sweep control is implemented specifically when the piezoelectric actuator A is started up, or when the reduction rate of the power source voltage is greater than the reference reduction rate. Intermittent drive control is implemented after the piezoelectric actuator A is started up, when the reduction rate of the power source voltage is less than the reference reduction rate.

A drive initiation signal from the switch 8 acts as a trigger for the operation of the control circuit 131, which causes the piezoelectric actuator A to start up based on the CLK signal produced by the CR generator circuit 150. Rotation detection signals from the plate spring 34 and the contact 35, which are the rotation detection means of the date display mechanism 10, are inputted to the control circuit 131, and the control circuit 131 transmits a stop signal to the driver 110 to end the driving of the piezoelectric actuator A on the basis of these signals.
Specifically, the number of rotations made by the date turning intermediate wheel 30 is determined from the number of times the plate spring 34 of the date display mechanism 10 comes into contact with the contact 35, and the determined number of rotations is inputted as a rotation determination signal to the control circuit 131. It is thereby possible to determine the specific amount by which the piezoelectric actuator A is driven, i.e., the amount by which the date wheel 50 rotates in one day. Determining the amount by which the date wheel 50 rotates is not limited to using the plate spring 34 and the contact element 35, and means can also be utilized that determine the rotating state of the rotor 20 or the date turning intermediate wheel 30 and output a specific pulse signal; i.e., a conventional photoreflector, a photointerrupter, an MR sensor, or other such various rotational encoders or the like can be utilized.

The drive frequency variation means 120 may include an integrator circuit (not shown) instead of the up/down counter 126, and may be configured to vary the drive frequency of the drive signal on the basis of the output value of the integrator circuit. The integrator circuit is configured having a capacitor, and the amount of electric charge stored in this capacitor is outputted as an output value to the D/A converter 127, whereby the drive frequency of the drive signal is varied. The electric charge of the capacitor is then discharged according to a command from the control circuit 131 when the drive frequency of the drive signal is initialized, and the drive frequency can be initialized to the initial frequency fmax, which is set according to the state in which the electric charge is 0.

### [1-3. Drive control method for the piezoelectric actuator A]

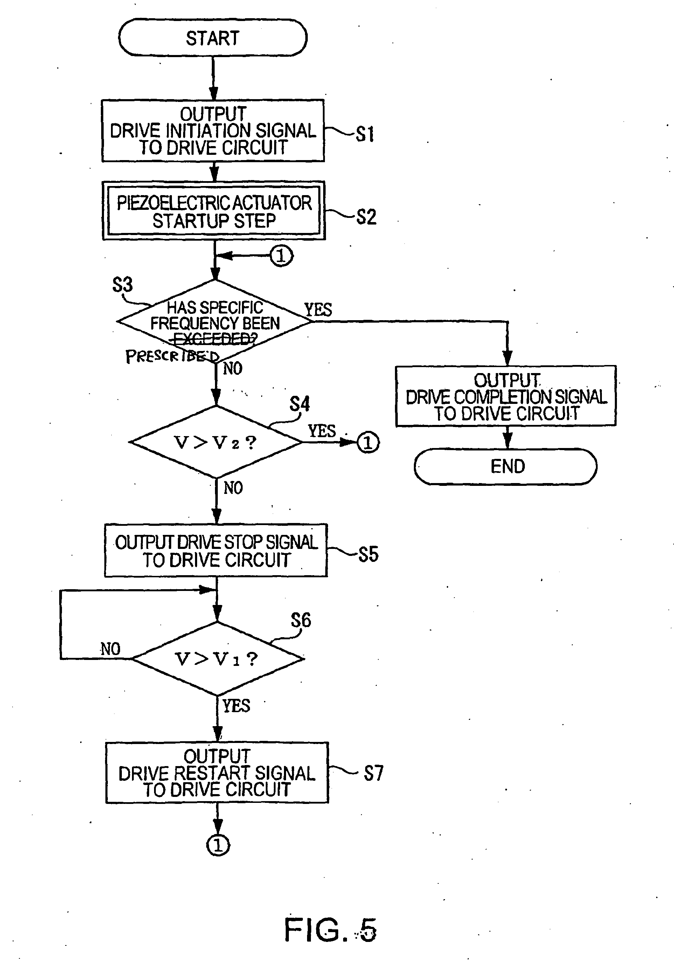

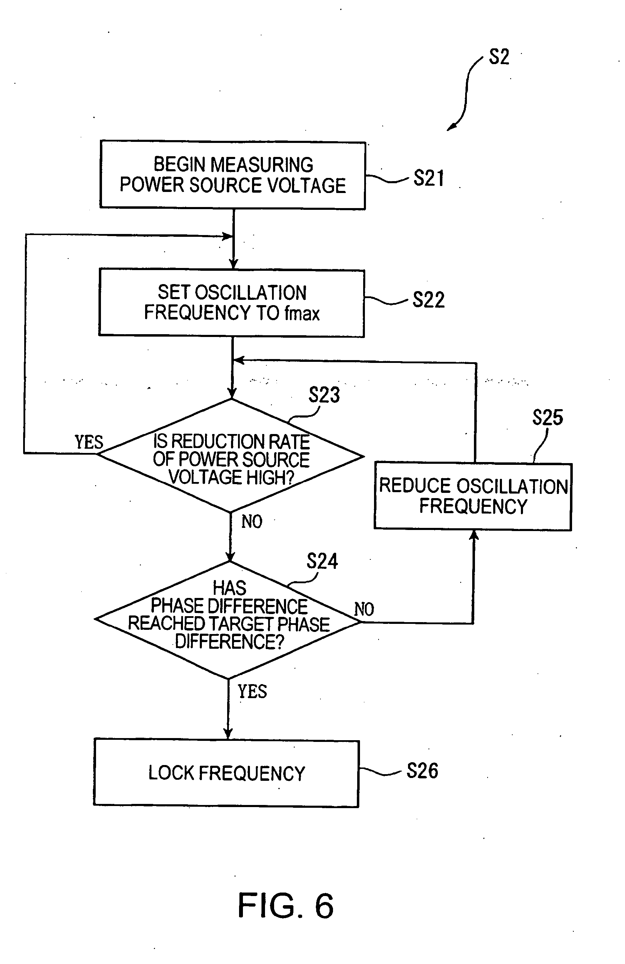

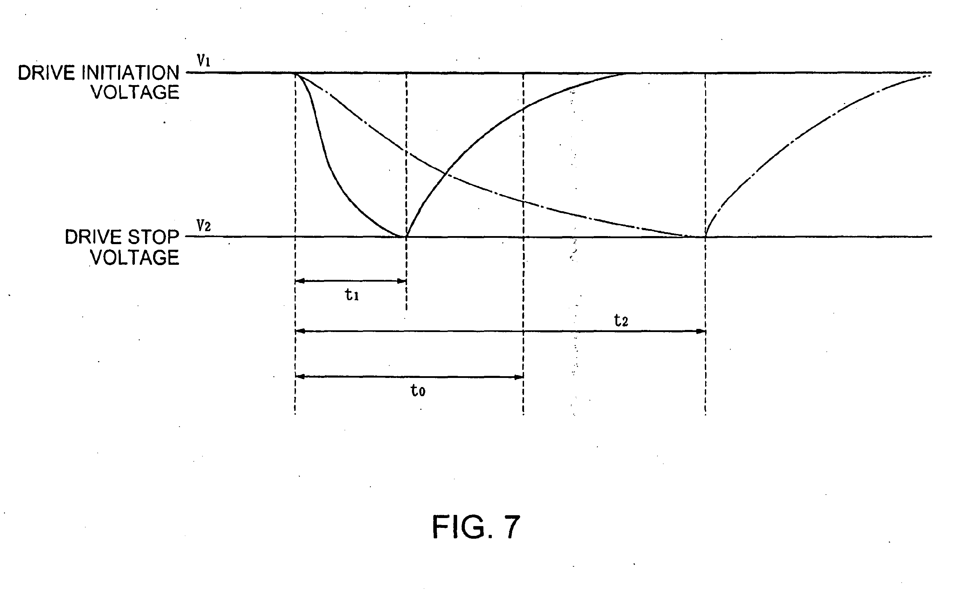

FIG. 5 is a flowchart showing the drive control method for the piezoelectric actuator A. FIG. 6 is a flowchart showing part of the drive control method. FIG. 7 is a timing chart showing the operation of the drive control apparatus 100.
The method for driving the piezoelectric actuator A by the aforementioned drive control apparatus 100 will now be described with reference to FIGS. 5 through 7.
Having received the drive initiation signal from the switch 8, the control circuit 131 outputs a drive initiation signal to the driver 110, and initiates driving of the piezoelectric actuator A (step S1).

Next, in the startup step in step S2 shown in FIG. 6, the control circuit 131 instructs the voltage detection circuit 140 to initiate measuring of the power source voltage (step S21, voltage detection step).
The control circuit 131 then outputs an initialization signal to the up/down counter 126, the count is reset to 0, and the drive frequency of the drive signal is set to the initial frequency (specific drive frequency) fmax (step S22).

In the next step S23, the control circuit 131 determines whether the reduction rate of the power source voltage is greater than the reference reduction rate, based on the time signal from the timer 132 and the power source voltage signal from the voltage detection circuit 140. The reference reduction rate referred to herein is the reduction rate that occurs when the time needed for the power source voltage to decrease from the drive initiation voltage V1 to the drive stop voltage V2 is a reference time t0, as shown in FIG. 7. The reference time t0 referred to herein is set based on the startup time of the piezoelectric actuator A, and the reference time t0 is set to about 2 msec in a piezoelectric actuator A with.a.startup time of about 1 msec, for example. Specifically, the reduction rate of the power source voltage is determined to be greater than the reference reduction rate when the time t needed for the power source voltage to decrease to the drive stop voltage V2 is less than the reference time t0, and the reduction rate of the power source voltage is determined to be less than the reference reduction rate when the time is greater than the reference time t0.

In step S23 (control step), when the reduction rate of the power source voltage is greater than the reference reduction rate ("Yes"); i.e., when the voltage rapidly decreases as shown by the solid line in FIG. 7 and decreases to the drive stop voltage V2 within a time t1 that is less than the reference time t0, the process returns to step S22, and the drive frequency is again swept from the initial frequency fmax. Specifically, since the power source voltage suddenly decreases (power drive efficiency), it is determined that the piezoelectric actuator A has failed to start up and another attempt to start up the actuator is made. In this case, the piezoelectric actuator A is stopped for a specific amount of time and is made to wait in standby mode until the power source voltage is restored to the drive initiation voltage V1. The piezoelectric actuator A is herein determined to have failed to start up, possibly because either it is impossible to initiate driving of the piezoelectric actuator A regardless of whether a drive signal is applied from the driver 110, or the nonuniformities in the detection signals during sweeping have caused the drive frequency to exceed the optimal drive frequency f0, resulting in a drive signal of a frequency lower than the optimal drive frequency f0. In such cases, the power source voltage rapidly decreases due to poor drive efficiency. The inability of the piezoelectric actuator A to begin driving or the fact that the detection signals are nonuniform may possibly be caused by the vibrating state of the piezoelectric actuator A temporarily changing due to noise, impact, vibration, or other events caused by static electricity.
Also, it is determined that the piezoelectric actuator A has succeeded in starting up, and the process advances to the next step S24 if the reduction rate of the power source voltage in step S23 is less than the reference reduction rate ("No"), i.e., if the voltage shown by the single dashed line in FIG. 7 decreases to the drive stop voltage V2 within a time t2 that is greater than the reference time t0.

In step S24, the phase difference between the drive signal and the detection signal, that have successively decreased in drive frequency is compared with the target phase difference. During the time needed for the phase difference to reach the target phase difference, i.e., while the determination in step S24 is still "No," the drive frequency means in step S25 conducts a frequency sweep (drive frequency varying step) in which the count of the up/down counter 126 is increased and the drive frequency is successively reduced according to the count. The process then returns to step S23, and the reduction rate of the power source voltage is again determined.
The process then advances to the next step S26 if the phase difference has reached the target phase difference ("Yes") in step S24; i.e., if the phase difference comparison circuit 124 has determined that the phase difference exceeds the target phase difference.
In step S26, the drive frequency of the drive signal is locked at the frequency (optimal drive frequency f0) reached at the time at which the target phase difference is achieved, the process in FIG. 5 advances to step S3, and the piezoelectric actuator A continues to be driven.
Sweep control of the piezoelectric actuator A is thus implemented according to the steps S21 through S26 described above.

Startup is successfully performed as described above, and the driving of the piezoelectric actuator A, which has been driven near the optimal drive frequency f0, is completed when the rotational frequency of the date turning intermediate wheel 30 exceeds a specific rotational frequency in step S3, to be described later.
During the time needed to reach this specific rotational frequency; i.e., while the determination in step S3 is still "No," the power source voltage V and the minimum operating voltage V2 are compared in step S4, and the piezoelectric actuator A continues to be driven while the power source voltage V continues to exceed the minimum operating voltage V2. In other words, if the determination is "Yes" in step S4, the driver 110 continues to apply a drive signal, and the piezoelectric actuator A continues to operate during the time needed for the rotational frequency of the date turning intermediate wheel 30 to exceed the specific rotational frequency. As a result of the continued operation of the piezoelectric actuator A, the battery voltage V gradually decreases, as shown in FIG. 7.
When the determination result is "No" in step S4; i.e., when the power source voltage V drops below the minimum operating voltage V2, the control circuit 131 outputs a drive stop signal that instructs the driver 110 to stop driving, and the piezoelectric actuator A is stopped (step S5). As a result of the piezoelectric actuator A being stopped, the battery voltage V is gradually recovered as shown in FIG. 7.

In the next step S6, if the power source voltage V has dropped below the drive initiation voltage V 1; i.e., if the determination is "No" in step S6, the control circuit 131 keeps the piezoelectric actuator A stopped and remains in standby until the power source voltage V is brought back up to the drive initiation voltage V 1.
When the power source voltage V exceeds the drive initiation voltage V1; i.e., when the determination is "Yes" in step S6, the control circuit 131 outputs a drive restart signal that instructs the driver 110 to restart driving, and the driving of the piezoelectric actuator A is restarted (step S7). After the driving of the piezoelectric actuator A is thus restarted, the process returns to step S3, and the piezoelectric actuator A is intermittently driven in the period until the rotational frequency of the date turning intermediate wheel 30 exceeds the specific rotational frequency.
As described above, intermittent drive control is implemented by repeatedly stopping and restarting the piezoelectric actuator A in steps S4 through S7. During intermittent driving, the phase difference between the detection signal and the drive signal is compared by the phase difference comparison circuit 124 of the drive frequency variation means 120, the count of the up/down counter 126 is varied, and, based on the results, feedback control is implemented in which the drive frequency of the drive signal is adjusted so as not to deviate from the optimal drive frequency f0.

In step S3, the control circuit 131 determines whether the rotational frequency of the date turning intermediate wheel 30 has exceeded the specific frequency; i.e., whether the date wheel 50 has rotated the amount equivalent to one day, based on the rotation detection signal inputted from the rotation detection means. If the rotational frequency of the date wheel 50 is insufficient; i.e., if the determination in step S3 is "No," then the piezoelectric actuator A continues to be driven, and if the date wheel 50 rotates by a specific amount and the determination in step S3 is "Yes," then a drive stop signal is outputted to the driver 110 to stop the piezoelectric actuator A, and drive control is completed.
In the drive control described above, if the battery voltage V does not drop below the minimum operating voltage V2 until the rotating amount of the date wheel 50 reaches the specific amount, then the piezoelectric actuator A is driven without stopping from the start of drive control until driving is completed.

Also, the sweep control in steps S21 through S26 is not limited to being implemented only when the piezoelectric actuator A is started up, and may be implemented during intermittent driving.
Specifically, although the drive frequency of the drive signal is brought to the optimal drive frequency f0 through sweep control at startup, the drive frequency sometimes deviates from the optimal drive frequency f0 for various reasons during driving. The deviation of the drive frequency of the piezoelectric actuator A from the optimal drive frequency f0 may possibly be caused by the vibrating state of the piezoelectric actuator A temporarily changing due to noise, impact, vibration, or other events caused by static electricity. Also, instead of the drive frequency deviating from the optimal drive frequency f0, the optimal drive frequency f0 itself sometimes fluctuates as a result of temperature fluctuations or drive torque fluctuations. In such cases, even if the drive frequency of the drive signal is adjusted through feedback control, more power is consumed due to poor drive efficiency, and the power source voltage is apt to decrease. Therefore, even during intermittent driving, the control circuit 131 monitors the reduction rate of the power source voltage on the basis of the time signal from the timer 132 and the power source voltage signal from the voltage detection circuit 140, and again implements the sweep control in steps S21 through S26 when the reduction rate is greater than the reference reduction rate. The drive efficiency of the piezoelectric actuator A can thereby be constantly stabilized.

### [1-4. Effects of the first embodiment]

The embodiment described above has the following effects.
(1) Specifically, in cases of poor drive efficiency when the piezoelectric actuator A has failed to start up, the actuator can be rapidly restarted (re-swept) by immediately determining, based on the reduction rate of the power source voltage, that the drive efficiency has decreased, and since the time needed to make such a determination is less than in conventional practice, the process beginning with detecting abnormalities and ending with optimizing the drive signal can be executed rapidly, and the amount of power consumed can be reduced to conserve energy.

(2) Also, in cases in which the drive frequency of the drive signal has deviated from the optimal drive frequency f0 for any reason while the piezoelectric actuator A is being driven, the drive signal of the piezoelectric actuator A can be brought to the optimum drive frequency by conducting another sweep on the basis of the reduction rate. This is because the power source voltage decreases at a higher rate if the drive efficiency greatly decreases due to this deviation from the optimal drive frequency f0.

(3) Furthermore, it is possible to more precisely determine whether the piezoelectric actuator A has succeeded in starting up, by setting the reference reduction rate (reference time t0) on the basis of the startup time of the piezoelectric actuator A, and it is possible to further reduce the time needed to conduct another sweep when the actuator has failed to start up.

(4) Also, since feedback control is implemented based on a phase difference comparison, it is possible for the phase difference comparison circuit 124 to immediately determine whether to increase or reduce the drive frequency in accordance with a value determined by the target phase difference and the phase difference between the drive voltage signal and the detection signal detected by the phase difference/DC conversion circuit 123, and drive control can be accomplished rapidly.

(5) Also, during sweep control, reducing the frequency from the initial frequency fmax to a lower frequency; i.e., sweeping the frequency from a high frequency range where power consumption is low, makes it possible to bring the frequency to the optimal drive frequency f0 while reducing power consumption because the frequency does not pass through the resonance frequency.

(6) Also, the reduction rate of the power source voltage can be immediately calculated from the relationship between the time needed for the voltage to drop below the drive stop voltage V2 as measured by the timer 132, and the power source voltage detected by the voltage detection circuit 140, making it possible to rapidly determine whether or not to restart the piezoelectric actuator A.

(7) Sweeping the drive frequency of the drive signal on the basis of the count of the up/down counter 126 (or the output value of the integrating circuit) and initializing (resetting) the count makes it possible to return the drive frequency to the initial frequency fmax and to restart the piezoelectric actuator A. It is therefore possible to easily implement sweep control and to simplify the structure of the circuitry in the drive control apparatus 100.

(8) Also, if the date display mechanism 10 is driven by the piezoelectric actuator A, highly efficient driving can be achieved with a small and thin configuration, and the electronic timepiece 1 can be reduced in size. Furthermore, the date display mechanism 10 is not constantly driven, but rather can be driven for a limited amount of time or by a specific amount (rotation amount) within one day. The mechanism is therefore suitable for sweep control in which the piezoelectric actuator A can be started in an optimal manner when driving is initiated.

(9) Furthermore, in the electronic timepiece 1, which is a wristwatch, the size (capacity) of the secondary battery 9 as the power source is limited, which has a profound effect on reducing power consumption. Particularly, the power source voltage tends to decrease during electrical discharge by the secondary battery 9, allowing the piezoelectric actuator A to be reliably driven by restarting the actuator on the basis of the voltage reduction rate.

### [2. Second embodiment]

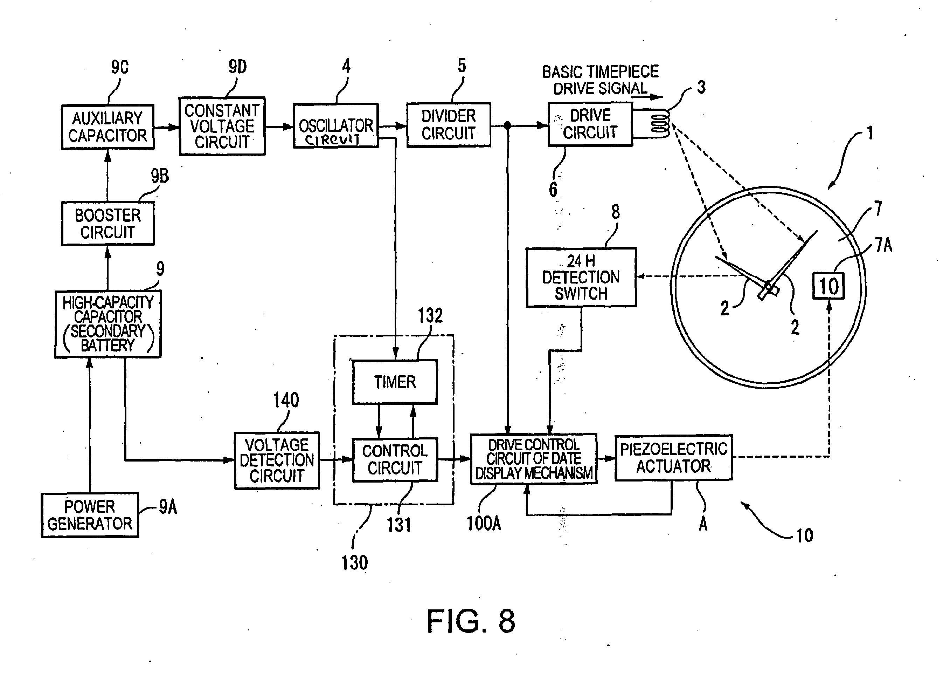

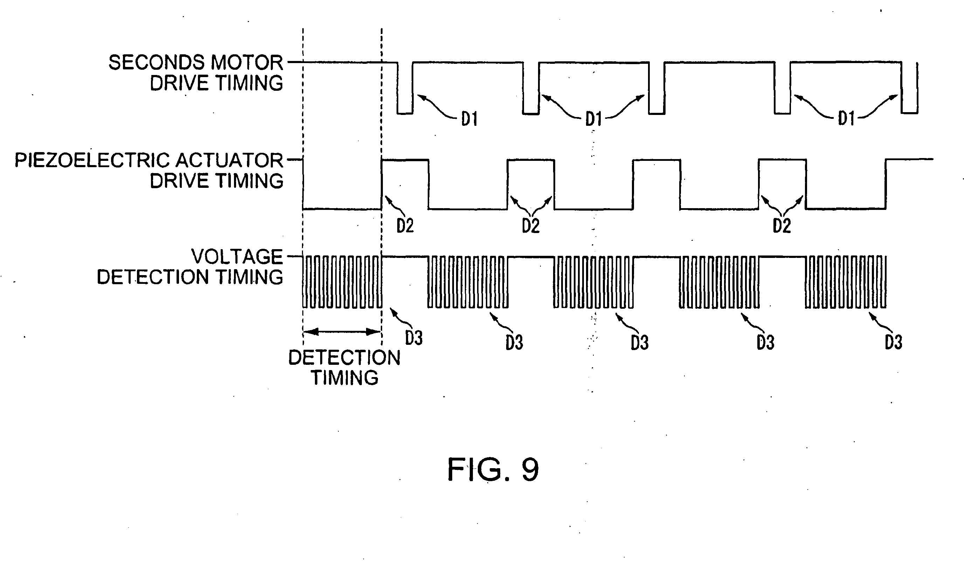

Next, the second embodiment of the present invention will be described with reference to FIGS. 8 and 9.
The configuration of the electronic timepiece 1 as the electronic device in the present embodiment is substantially similar to the first embodiment, and a detailed description thereof is not given herein. The electronic timepiece 1 of the present embodiment is characterized by the relationship between the power source 9, the time display unit, and the date display mechanism 10, and also by the relationship between the drive timing of the time display unit (pointers 2) and the drive timing of the date display mechanism 10. These characteristic features are described in detail hereinbelow.

### [2.1 Configuration of power source and drive control apparatus of piezoelectric actuator A]

FIG. 8 is a diagram showing the schematic configuration of the electronic timepiece 1 as the electronic device of the present embodiment.
In FIG. 8, a high-capacity capacitor (secondary battery) 9, which is the power source of the electronic timepiece 1, is connected to an oscillator 4, a divider circuit 5, a drive circuit 6, and a stepping motor 3, which are the drive units of the time display unit, via a booster circuit 9B, an auxiliary capacitor 9C, and a constant voltage circuit 9D. The high-capacity capacitor 9 is connected to a drive control circuit 100A of the date display mechanism 10 via the same control means 130 and voltage detection circuit (voltage detection means) 140 shown in FIG. 4 in the first embodiment. A basic timepiece drive signal from the oscillator 4 is inputted to the timer 132 of the control means 130 as a result. Thus, the power source voltage discharged by the high-capacity capacitor 9 is increased by the booster circuit 9B, and is then applied to the drive units of the time display unit after being temporarily discharged in the auxiliary capacitor 9C, whereby a stable drive voltage can be supplied to the stepping motor 3, and the movement of the pointers 2 can be stabilized.

### [2-2. Drive control method of piezoelectric actuator A]

In the drive control method for the piezoelectric actuator A in the present embodiment, the driving of the piezoelectric actuator A is controlled with an operation timing in which there is no superposition of loads other than the load from the piezoelectric actuator A in the electronic timepiece 1.
Examples of loads other than the load from the piezoelectric actuator A in the electronic timepiece 1 include the drive pulse of the stepping motor 3 of the time display unit, the drive pulse of an alarm or buzzer or the like, the drive pulse of a vibrating motor, the drive pulse of a light-emitting diode in an optical position determining device for determining the positions of the pointers 2 or other moving members, and other elements that impose a large load (heavy load) on the power source voltage. Described below is a control method for controlling the driving of the piezoelectric actuator A and the voltage detection timing in the drive control of the piezoelectric actuator A on the basis of the timing of the drive pulse for driving the stepping motor 3 (seconds motor), which is a typical example of an element that imposes a heavy load.

FIG. 9 is a timing chart showing the operation in the electronic timepiece 1.
In FIG. 9, the stepping motor 3 (seconds motor) is driven with a drive pulse D1 based on a 1-Hz reference signal from the divider circuit 5. Voltage drops therefore occur at one-second intervals. It has been determined that when an attempt is made to start up the piezoelectric actuator A at the voltage-drop timing, the power source voltage decreases regardless of whether the power source voltage has actually decreased, and the drive frequency is frequently varied by the drive frequency variation means 120. Therefore, in the drive control method of the present embodiment, the detection timing D3 with which the voltage detection circuit 140 detects the voltage reduction is set so as to deviate from the timing of the drive pulse D1 of the stepping motor 3 (seconds motor), based on the basic timepiece drive signal from the oscillator 4. In other words, the voltage is detected by the voltage detection circuit 140 in the 1-Hz reference signal intervals (about one second), and the voltage is not detected in the time from immediately before the drive pulse of the stepping motor 3 is outputted to immediately after it is outputted. The drive timing D2 of the piezoelectric actuator A is also set so as to deviate from the timing of the drive pulse D 1 of the stepping motor 3, similar to the detection timing D3.

According to the present embodiment as described above, the detection timing D3 of the voltage reduction deviates from the timing (timing of drive pulse D1) with which driving is performed so that a large load is imposed on the power source voltage. As a result, the effects of heavy loads can be avoided, and it is possible to prevent situations in which the drive frequency of the piezoelectric actuator A is needlessly varied despite the fact that the power source voltage does not decrease and the device continues to operate normally. Therefore, in the electronic timepiece 1, the movement of the pointers 2 can be stabilized, and needless power consumption can be prevented to further conserve electricity.

### [3. Third embodiment]

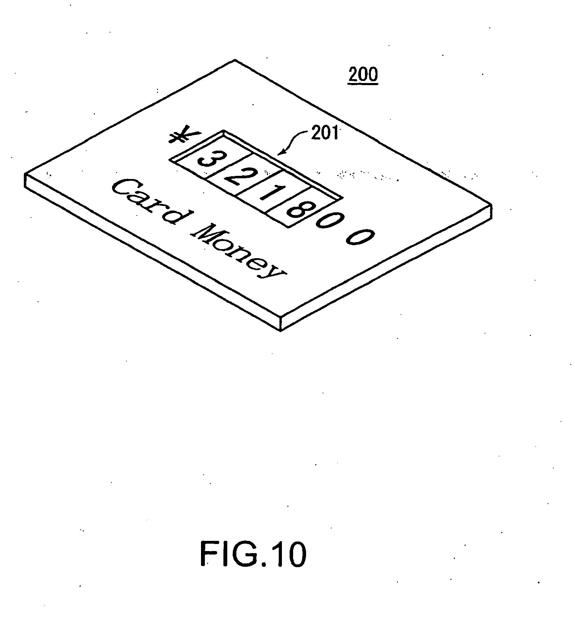

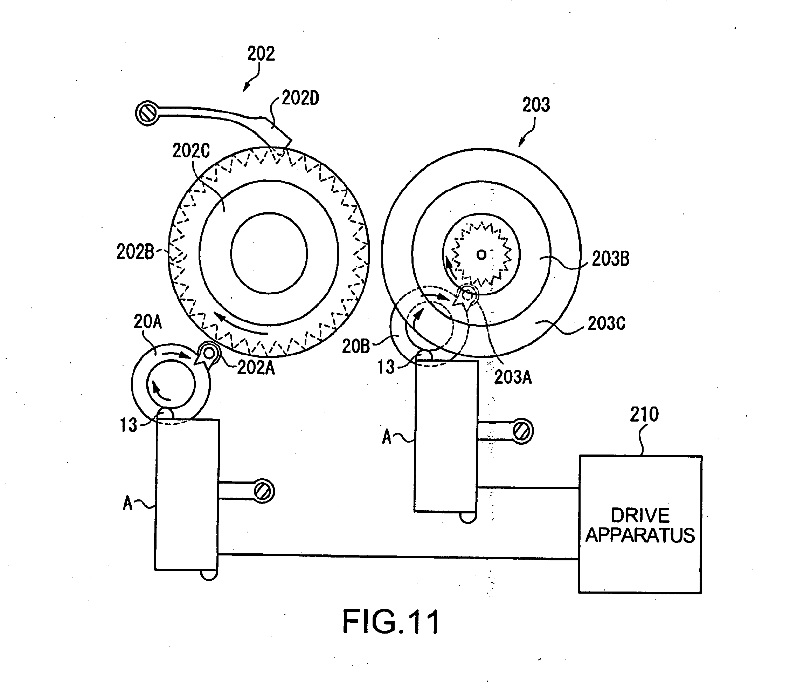

Next, the third embodiment of the present embodiment will be described with reference to FIGS. 10 and 11.
The present embodiment differs from the first and second embodiments in that the drive control apparatus 100 (drive control circuit 100A) is applied to a portable electronic device, but the configuration of the drive apparatus for the piezoelectric actuator is the same in any of the embodiments. In the description of the third embodiment, structural components that are similar to those in the previous embodiments are denoted by the same numerical symbols, and descriptions thereof are omitted or simplified.

### [3-1. Configuration of electronic device]

In the present embodiment, the electronic device (portable device) is a noncontact IC card 200 having a payment function, and this IC card 200 is provided with a piezoelectric actuator A and a drive apparatus 210.
FIG. 10 is an external perspective view of the noncontact IC card 200.
In FIG. 10, a remaining balance display counter 201 for displaying the remaining balance is disposed in the surface of the noncontact IC card 200.
The remaining balance display counter 201 displays the remaining balance in four digits, and includes an upper digit display section 202 for displaying the upper two digits, and a lower digit display section 203 for displaying the lower two digits, as shown in FIG. 11.

The upper digit display section 202 is linked to the piezoelectric actuator A via a rotor 20A, and is driven by the driving force of the rotor 20A. The main section of the upper digit display section 202 includes a drive gear 202A that has urging teeth and that rotates once when the rotor 20A rotates 1/n times, a first upper digit display wheel 202B that rotates by one graduation when the drive gear 202A rotates once, a second upper digit display wheel 202C that turns by one graduation when the first upper digit display wheel 202B rotates once, and a fixing member 202D for fixing the first upper digit display wheel 202B in place when the first upper digit display wheel 202B is not rotating. The second upper digit display wheel 202B is also provided with a fixing member (not shown) for fixing the second upper digit display wheel 202C in place.
The drive gear 202A rotates once when the rotor 20A rotates 1 /n times. The urging teeth of the drive gear 202A mesh with the urging gear section of the first upper digit display wheel 202B, and the first upper digit display wheel 202B is rotated by one graduation. Furthermore, when the first upper digit display wheel 202B rotates once, an urging pin provided to the first upper digit display wheel 202B rotates the urging gear, an urging gear of the second upper digit display wheel 202C is also rotated, and the second upper digit display wheel 202C is rotated by one graduation.

The lower digit display section 203 is linked to the piezoelectric actuator A via a rotor 20B, and is driven by the driving force of the rotor 20B. The main section of the lower digit display section 203 includes a drive gear 203A that has urging teeth and that rotates once when the rotor 20B rotates 1/n times, a first lower digit display wheel 203B that turns by one graduation when the drive gear 203A rotates once, and a second lower digit display wheel 203C that turns by one graduation when the first lower digit display wheel 203B rotates once.
The first lower digit display wheel 203B has an urging gear that meshes with the urging teeth of the drive gear 203A and turns by one graduation when the drive gear 203A rotates once. The first lower digit display wheel 203B is provided with an urging pin, which rotates the urging gear and also turns the second lower digit display wheel 203C by one graduation every time the first lower digit display wheel 203B rotates once. In this case, the fixing members (not shown) of the first lower digit display wheel 203B and the second lower digit display wheel 203C mesh with the corresponding urging gears and fix the first lower digit display wheel 203B and the second lower digit display wheel 203C in place when they are not rotating.

In the noncontact IC card 200 described above, the actuator A is set so as to be driven synchronously by the drive apparatus 210, and the drive apparatus 210 is driven by the input of a drive control signal that corresponds to a settlement figure inputted by an IC card chip (not shown). The specific structure of the drive apparatus 210 is the same as the drive control apparatus 100 in all the previous embodiments, so descriptions thereof are omitted.
Such a configuration allows even a thin portable device such as a noncontact IC card to mechanically display the remaining balance, and the information to be displayed without the need for a power source during periods in which driving is not performed. Therefore, data can be displayed with low product power, and the current display can be maintained even when the power source has expired.

### [4. Modifications of the embodiments]

The present invention is not limited to the previous embodiments, and includes modifications such as those shown below.
For example, in the previous embodiments, an electronic timepiece 1, or a wristwatch, and an IC card 200 were described, but the electronic timepiece is not limited to a wristwatch and may also be a standing clock or a wall clock. Also, the electronic device is not limited to an electronic timepiece or an IC card. The present invention can be applied to various electronic devices, and is particularly suitable for electronic devices for portable use that require size reduction. Possible examples of the various electronic devices include phones, portable phones, personal computers, personal digital assistants (PDA), cameras, and other devices that include a timepiece function. The present invention can also be applied to electronic devices that do not include a timepiece function, such as cameras, digital cameras, video cameras, and portable phones with a camera function. When the present invention is applied to an electronic device with a camera function, the drive means of the present invention can be used to drive the focusing mechanism for the lens, the zoom mechanism, the aperture adjusting mechanism, or the like. Furthermore, the drive device of the present invention may be used as a drive mechanism for meter pointers in a measuring device, or a drive mechanism for mobile toys.
Also, in the previous embodiments, the piezoelectric actuator A was used as the drive means for driving the date display mechanism of the electronic timepiece 1, but the present invention is not limited thereto, and the time display hands (pointers) of the electronic timepiece 1 may also be driven by the drive device of the present invention. Thus, replacing the stepping motor 3 for driving the pointers with the piezoelectric actuator A makes it possible to further reduce the thickness of the electronic timepiece, and also makes it possible to ensure that the electronic timepiece will be highly antimagnetic because the piezoelectric actuator A is less susceptible to the effects of magnetism than the stepping motor.

Furthermore, in the present invention, all the devices within the drive control apparatus 100 are configured from various logical circuit elements and other hardware, but the present invention is not limited thereto and may also be configured so that the means are emulated by mounting a computer with a CPU (central processing unit) and memory (storage apparatus) in the electronic device, and incorporating specific programs and data (data stored in the storage units) into the computer.
The programs and data may be stored in advance in RAM, ROM, or another type of memory incorporated into the electronic device. Also, for example, a specific control program and data may be installed in the electronic device via the Internet or another such communication means, or a CD-ROM, memory card, or other such recording medium. The devices may be implemented by operating the CPU or the like with a program stored in the memory. Specific programs and the like may be installed in a timepiece or portable device by directly inserting a memory card or a CD-ROM into the timepiece or portable device, or by externally connecting a device for reading these recording media to the timepiece or portable device. Furthermore, a LAN cable, a phone line, or the like may be connected to the timepiece or portable device to load and install the programs by communication, or the programs may be supplied and installed wirelessly.

In the previous embodiments, the phase difference between the detection signal and the drive signal was determined as an indicator of the vibrating state of the vibrator 12, and the drive frequency of the drive signal was varied based on comparing this phase difference with an target phase difference, but the present invention is not limited thereto. Specifically, the voltage value or electric current value of the detection signal may be used as an indicator of the vibrating state of the vibrator 12, and the voltage value or electric current value of the detection signal may be compared with the voltage value or electric current value of the drive signal.
Furthermore, the target phase difference is not limited to a preset specified value, and the configuration may be designed to allow the target phase difference to be suitably varied according to the vibrating state of the vibrator 12.

In the previous embodiments, the drive frequency was reduced during sweep control from the initial frequency fmax, which is a high frequency, but the present invention is not limited thereto, and the frequency may be increased from a low initial frequency. Furthermore, the optimal drive frequency f0 from the last driving (of the previous day) may be stored, and this previous value may be used as the initial value.
Furthermore, in the previous embodiments, the timer 132 was used to calculate the reduction rate of the power source voltage, but the present invention is not limited thereto, and a counter or the like may be used to count the number of times the frequency is varied during sweep control, and the reduction rate of the power source voltage may be calculated based on the count.

### INDUSTRIAL APPLICABILITY

The present invention can be used in an apparatus for driving a piezoelectric actuator, in an electronic device, in a drive control method for an electronic device, in a drive control program for an electronic device, and in a recording medium on which this program is recorded.

## Claims

1. An apparatus for driving a piezoelectric actuator (A) having a vibrator that vibrates due to the application of a drive signal having a prescribed drive frequency to a piezoelectric element; said apparatus for driving a piezoelectric actuator comprising:
drive means (110) for supplying the drive signal to a piezoelectric element of the vibrator;
vibration detecting means for detecting the vibration of the vibrator and outputting a detected detection signal;
drive frequency variation means (120) for varying the drive frequency of the drive signal so that the vibrating state of the vibrator detected from the detection signal is brought closer to a reference vibrating state;
voltage detecting means (140) for detecting at least one type of voltage selected from the power source voltage and the drive voltage of the piezoelectric actuator; and **characterized by**
control means (130) for causing the drive frequency variation means to vary the drive frequency so that the drive frequency of the drive signal is increased or reduced from the prescribed drive frequency, and returning the drive frequency to the prescribed drive frequency and then again varying the drive frequency on the basis of the voltage reduction rate detected by the voltage detecting means when the reduction rate is greater than a preset reference reduction rate.

2. The apparatus for driving a piezoelectric actuator according to claim 1,
**characterized in that**:
the reference reduction rate is set based on the required startup time of the piezoelectric actuator; and
the control means causes the drive frequency variation means to vary the drive frequency based on at least one reduction rate selected from the reduction rate of the power source voltage and the reduction rate of the drive voltage of the piezoelectric actuator when the piezoelectric actuator begins to be driven.

3. The apparatus for driving a piezoelectric actuator according to claim 1 or 2, **characterized in that**:
the drive frequency variation means has phase difference detection means (123) for detecting the phase difference between the drive signal and the detection signal, and comparison means (124) for comparing the phase difference with a preset target phase difference, and the drive frequency of the drive signal is varied based on the results of the comparison so that the phase difference is brought closer to the target phase difference.

4. The apparatus for driving a piezoelectric actuator according to any of claims 1 through 3, **characterized in that**:
the control means causes the drive frequency variation means to vary the drive frequency by using as the starting frequency a frequency that is higher than the frequency need to achieve the target vibrating state.

5. The apparatus for driving a piezoelectric actuator according to any of claims 1 through 4, **characterized in that**:
the control means has a timer (132) for measuring the time needed for at least one type of voltage selected from the power source voltage and the drive voltage of the piezoelectric actuator to drop below a preset drive stop voltage, and the control means determines that the reduction rate is greater than the reference reduction rate when the time measured by the timer is shorter than the preset reference time.

6. The apparatus for driving a piezoelectric actuator according to any of claims 1 through 5, **characterized in that**:
the drive frequency variation means has an up/down counter (126) and varies the drive frequency of the drive signal on the basis of the count of the up/down counter; and
the control means initializes the count of the up/down counter and varies the drive frequency again when the control means determines that the reduction rate of at least one type of voltage selected from the power source voltage and the drive voltage of the piezoelectric actuator is greater than the reference reduction rate.

7. The apparatus for driving a piezoelectric actuator according to any of claims 1 through 5, **characterized in that**:
the drive frequency variation means has an integrating circuit and varies the drive frequency of the drive signal on the basis of the output value of the integrating circuit; and
the control means initializes the output value of the integrating circuit and varies the drive frequency one more time when the control means determines that the reduction rate of at least one type of voltage selected from the power source voltage and the drive voltage of the piezoelectric actuator is greater than the reference reduction rate.

8. An electronic device, **characterized by** comprising the apparatus for driving a piezoelectric actuator according to any of claims 1 through 7, a piezoelectric actuator driven by the apparatus, and a power source (9).

9. The electronic device according to claim 8, **characterized in that**:
the device is an electronic timepiece (1) comprising a date display mechanism (10) driven by the piezoelectric actuator.

10. An electronic device drive method for driving an electronic device comprising a piezoelectric actuator (A) having a vibrator that vibrates due to the application of a drive signal of a prescribe drive frequency to a piezoelectric element, and a power source (9) that supplies electricity to the piezoelectric element of the vibrator; said electronic device drive method **characterized in** comprising:
a vibration detection step for detecting the vibration of the vibrator and outputting a detected detection signal;
a voltage detection step for detecting at least one type of voltage selected from the power source voltage and the drive voltage of the piezoelectric actuator;
a drive frequency varying step for increasing or reducing the drive frequency of the drive signal from the prescribed drive frequency so that the vibrating state of the vibrator as detected from the detection signal is brought closer to the target vibrating state; and
a control step for returning the drive frequency to the prescribed drive frequency and conducting another drive frequency varying step on the basis of the voltage reduction rate as detected in the voltage detection step when the reduction rate is greater than a preset reference reduction rate.

11. A drive control program for an electronic device drive method according to claim 8 for controlling the driving of an electronic device comprising a piezoelectric actuator (A) having a vibrator that vibrates due to the application of a drive signal of a prescribed drive frequency to a piezoelectric element, and a power source (9) that supplies electricity to the piezoelectric element of the vibrator, wherein said drive control program for an electronic device is **characterized in that** a computer is made to function at least as control means selected from the group consisting of:
drive means for supplying the drive signal to the piezoelectric element of the vibrator;
vibration detection means for detecting the vibration of the vibrator and outputting a detected detection signal;
drive frequency variation means for varying the drive frequency of the drive signal so that the vibrating state of the vibrator as detected from the detection signal is brought closer to the target vibrating state;
voltage detection means for detecting at least one type of voltage selected from the power source voltage and the drive voltage of the piezoelectric actuator; and
control means for causing the drive frequency variation means to vary the drive frequency so that the drive frequency of the drive signal is increased or reduced from the prescribed drive frequency, and returning the drive frequency to the prescribed drive frequency and conducting another drive frequency varying step on the basis of the voltage reduction rate as detected by the voltage detection means when the reduction rate is greater than a preset reference reduction rate.

12. A recording medium, **characterized in that** the drive control program for an electronic device according to claim 11 is recorded in a manner that allows the program to be read by a computer.

## Patentansprüche

1. Vorrichtung zum Ansteuern eines piezoelektrischen Aktors (A) mit einem Vibrator, der aufgrund des Anlegens eines Ansteuerungssignals mit einer vorgeschriebenen Ansteuerungsfrequenz an ein piezoelektrisches Element vibriert; wobei die Vorrichtung zum Ansteuern eines piezoelektrischen Aktors Folgendes umfasst:
ein Ansteuerungsmittel (110) zum Anlegen des Ansteuerungssignals an ein piezoelektrisches Element des Vibrators;
ein Vibrationserfassungsmittel zum Erfassen der Vibration des Vibrators und zum Ausgeben eines erfassten Erfassungssignals;
ein Ansteuerungsfrequenzvariationsmittel (120) zum Variieren der Ansteuerungsfrequenz des Ansteuerungssignals, so dass der Vibrationszustand des Vibrators, der aus dem Erfassungssignal erfasst wird, einem Referenzvibrationszustand näher gebracht wird;
ein Spannungserfassungsmittel (140) zum Erfassen mindestens einer Art von Spannung, die ausgewählt ist aus der Energiequellenspannung und der Ansteuerungsspannung des piezoelektrischen Aktors; und **gekennzeichnet durch**
ein Steuermittel (130), das das Ansteuerungsfrequenzvariationsmittel veranlasst, die Ansteuerungsfrequenz derart zu variieren, dass die Ansteuerungsfrequenz des Ansteuerungssignals von der vorgeschriebenen Ansteuerungsfrequenz erhöht oder gesenkt wird, und die Ansteuerungsfrequenz auf die vorgeschriebene Ansteuerungsfrequenz zurückstellt und dann die Ansteuerungsfrequenz auf der Basis der Spannungssenkungsrate, die von dem Spannungserfassungsmittel erfasst wird, erneut variiert, wenn die Senkungsrate höher als eine im Voraus eingestellte Referenzsenkungsrate ist.

2. Vorrichtung zum Ansteuern eines piezoelektrischen Aktors nach Anspruch 1, **dadurch gekennzeichnet, dass**:
die Referenzsenkungsrate auf der Basis der erforderlichen Anfahrzeit des piezoelektrischen Aktors eingestellt ist; und
das Steuermittel das Ansteuerungsfrequenzvariationsmittel veranlasst, die Ansteuerungsfrequenz auf der Basis mindestens einer Senkungsrate zu variieren, die aus der Senkungsrate der Energiequellenspannung und der Senkungsrate der Ansteuerungsspannung des piezoelektrischen Aktors ausgewählt ist, wenn die Ansteuerung des piezoelektrischen Aktors beginnt.

3. Vorrichtung zum Ansteuern eines piezoelektrischen Aktors nach Anspruch 1 oder 2, **dadurch gekennzeichnet, dass**:
das Ansteuerungsfrequenzvariationsmittel ein Phasendifferenzerfassungsmittel (123) zum Erfassen der Phasendifferenz zwischen dem Ansteuerungssignal und dem Erfassungssignal aufweist, sowie ein Vergleichsmittel (124) zum Vergleichen der Phasendifferenz mit einer im Voraus eingestellten Zielphasendifferenz, und die Ansteuerungsfrequenz des Ansteuerungssignals auf der Basis der Ergebnisse des Vergleichs variiert wird, so dass die Phasendifferenz näher zu der Zielphasendifferenz gebracht wird.

4. Vorrichtung zum Ansteuern eines piezoelektrischen Aktors nach einem der Ansprüche 1 bis 3, **dadurch gekennzeichnet, dass**:
das Steuermittel das Ansteuerungsfrequenzvariationsmittel veranlasst, die Ansteuerungsfrequenz unter Verwendung einer Frequenz als Startfrequenz zu variieren, die höher als die Frequenz ist, die zum Erreichen des Zielvibrationszustandes erforderlich ist.

5. Vorrichtung zum Ansteuern eines piezoelektrischen Aktors nach einem der Ansprüche 1 bis 4, **dadurch gekennzeichnet, dass**:
das Steuermittel einen Zeitgeber (132) zum Messen der Zeit aufweist, die erforderlich ist, damit mindestens eine Art von Spannung, die ausgewählt ist aus der Energiequellenspannung und der Ansteuerungsspannung des piezoelektrischen Aktors, unter eine im Voraus eingestellte Ansteuerungsstoppspannung fällt, und das Steuermittel bestimmt, dass die Senkungsrate höher als die Referenzsenkungsrate ist, wenn die Zeit, die von dem Zeitgeber gemessen wird, kürzer als die im Voraus eingestellte Referenzzeit ist.

6. Vorrichtung zum Ansteuern eines piezoelektrischen Aktors nach einem der Ansprüche 1 bis 5, **dadurch gekennzeichnet, dass**:
das Ansteuerungsfrequenzvariationsmittel einen Aufwärts/Abwärts-Zähler (126) aufweist und die Ansteuerungsfrequenz des Ansteuerungssignals auf der Basis der Zählung des Aufwärts/Abwärts-Zählers variiert; und
das Steuermittel die Zählung des Aufwärts/Abwärts-Zählers initialisiert und die Ansteuerungsfrequenz erneut variiert, wenn das Steuermittel bestimmt, dass die Senkungsrate mindestens einer Art von Spannung, die ausgewählt ist aus der Energiequellenspannung und der Ansteuerungsspannung des piezoelektrischen Aktors, höher als die Referenzsenkungsrate ist.

7. Vorrichtung zum Ansteuern eines piezoelektrischen Aktors nach einem der Ansprüche 1 bis 5, **dadurch gekennzeichnet, dass**:
das Ansteuerungsfrequenzvariationsmittel eine integrierende Schaltung aufweist und die Ansteuerungsfrequenz des Ansteuerungssignals auf der Basis des Ausgangswertes der integrierenden Schaltung variiert; und
das Steuermittel den Ausgangswert der integrierenden Schaltung initialisiert und die Ansteuerungsfrequenz noch einmal variiert, wenn das Steuermittel bestimmt, dass die Senkungsrate mindestens einer Art von Spannung, die ausgewählt ist aus der Energiequellenspannung und der Ansteuerungsspannung des piezoelektrischen Aktors, höher als die Referenzsenkungsrate ist.

8. Elektronisches Element, **dadurch gekennzeichnet, dass** es die Vorrichtung zum Ansteuern eines piezoelektrischen Aktors nach einem der Ansprüche 1 bis 7, einen piezoelektrischen Aktor, der von der Vorrichtung angesteuert wird, und eine Energiequelle (9) umfasst.

9. Elektronisches Element nach Anspruch 8, **dadurch gekennzeichnet, dass**:
die Vorrichtung eine elektronische Uhr (1) ist, die einen Datumsanzeigemechanismus (10) aufweist, der durch den piezoelektrischen Aktor angesteuert wird.

10. Ansteuerungsverfahren für ein elektronisches Element zum Ansteuern eines elektronischen Elements, das einen piezoelektrischen Aktor (A) mit einem Vibrator umfasst, der aufgrund des Anlegens eines Ansteuerungssignals mit einer vorgeschriebenen Ansteuerungsfrequenz an ein piezoelektrisches Element vibriert, und eine Energiequelle (9), die Elektrizität zu dem piezoelektrischen Element des Vibrators leitet; wobei das Ansteuerungsverfahren für ein elektronisches Element **dadurch gekennzeichnet ist, dass** es Folgendes umfasst:
einen Vibrationserfassungsschritt zum Erfassen der Vibration des Vibrators und zum Ausgeben eines erfassten Erfassungssignals;
einen Spannungserfassungsschritt zum Erfassen mindestens einer Art von Spannung, die ausgewählt ist aus der Energiequellenspannung und der Ansteuerungsspannung des piezoelektrischen Aktors;
einen Ansteuerungsfrequenzvariierungsschritt zum Erhöhen oder Senken der Ansteuerungsfrequenz des Ansteuerungssignals von der vorgeschriebenen Ansteuerungsfrequenz, so dass der vibrierende Zustand des Vibrators, der von dem Erfassungssignal erfasst wird, näher zu dem Zielvibrationszustand gebracht wird; und
einen Steuerschritt zum Zurückstellen der Ansteuerungsfrequenz auf die vorgeschriebene Ansteuerungsfrequenz und zum Durchführen eines weiteren Ansteuerungsfrequenzvariationsschrittes auf der Basis der Spannungssenkungsrate, die in dem Spannungserfassungsschritt erfasst wird, wenn die Senkungsrate höher als eine im Voraus eingestellte Referenzsenkungsrate ist.

11. Ansteuerungssteuerprogramm für ein Ansteuerungsverfahren für ein elektronisches Element nach Anspruch 8 zum Steuern der Ansteuerung eines elektronischen Elements, das einen piezoelektrischen Aktor (A) mit einem Vibrator, der aufgrund des Anlegens eines Ansteuerungssignals mit einer vorgeschriebenen Ansteuerungsfrequenz an ein piezoelektrisches Element vibriert, und eine Energiequelle (9), die Elektrizität zu dem piezoelektrischen Element des Vibrators leitet, umfasst, wobei das Ansteuerungssteuerprogramm für ein elektronisches Element **dadurch gekennzeichnet ist, dass** ein Computer so ausgebildet ist, dass er mindestens als Steuermittel dient, das ausgewählt ist aus der Gruppe bestehend aus:
einem Ansteuerungsmittel zum Zuleiten des Ansteuerungssignals zu dem piezoelektrischen Element des Vibrators;
einem Vibrationserfassungsmittel zum Erfassen der Vibration des Vibrators und zum Ausgeben eines erfassten Erfassungssignals;
einem Ansteuerungsfrequenzvariationsmittel zum Variieren der Ansteuerungsfrequenz des Ansteuerungssignals, so dass der Vibrationszustand des Vibrators, der aus dem Erfassungssignal erfasst wird, näher zu dem Zielvibrationszustand gebracht wird;
einem Spannungserfassungsmittel zum Erfassen mindestens einer Art von Spannung, die ausgewählt ist aus der Energiequellenspannung und der Ansteuerungsspannung des piezoelektrischen Aktors; und
ein Steuermittel, das das Ansteuerungsfrequenzvariationsmittel veranlasst, die Ansteuerungsfrequenz derart zu variieren, dass die Ansteuerungsfrequenz des Ansteuerungssignals von der vorgeschriebenen Ansteuerungsfrequenz erhöht oder gesenkt wird, und die Ansteuerungsfrequenz auf die vorgeschriebene Ansteuerungsfrequenz zurückstellt und einen weiteren Ansteuerungsfrequenzvariationsschritt auf der Basis der Spannungssenkungsrate durchführt, die von dem Spannungserfassungsmittel erfasst wird, wenn die Senkungsrate höher als eine im Voraus eingestellte Referenzsenkungsrate ist.

12. Aufzeichnungsmedium, **dadurch gekennzeichnet, dass** das Ansteuerungssteuerprogramm für ein elektronisches Element nach Anspruch 11 in einer Weise aufgezeichnet ist, dass das Programm von einem Computer gelesen werden kann.

## Revendications

1. Appareil pour piloter un actionneur piézoélectrique (A) ayant un vibreur qui vibre en raison de l'envoi d'un signal d'attaque ayant une fréquence d'attaque prescrite à l'attention d'un élément piézoélectrique ; ledit appareil pour piloter un actionneur piézoélectrique comprenant :
un moyen de commande (110) pour fournir le signal d'attaque à un élément piézoélectrique du vibreur ;
un moyen de détection des vibrations pour détecter les vibrations du vibreur et émettre un signal de détection détectée ;
un moyen de variation de la fréquence de commande (120) pour faire varier la fréquence de commande du signal d'attaque de manière à ce que l'état de vibration du vibreur détecté grâce au signal de détection se rapproche davantage d'un état de vibration de référence;
un moyen de détection de tension (140) pour détecter au moins un type de tension sélectionné parmi la tension d'alimentation et la tension de commande de l'actionneur piézoélectrique ; et **caractérisé par**
un moyen de régulation (130) pour faire en sorte que le moyen de variation de la fréquence de commande fasse varier la fréquence de commande de manière à ce que la fréquence de commande du signal d'attaque augmente ou diminue par rapport à la fréquence de commande prescrite, et fasse revenir la fréquence de commande à la fréquence de commande prescrite et fasse ensuite de nouveau varier la fréquence de commande sur la base du taux de réduction de tension détecté par le moyen de détection de tension lorsque le taux de réduction est supérieur à un taux de réduction de référence préréglé.

2. Appareil pour piloter un actionneur piézoélectrique selon la revendication 1, **caractérisé en ce que** :
le taux de réduction de référence est fixé sur la base du moment de démarrage requis de l'actionneur piézoélectrique, et
le moyen de régulation faisant en sorte que le moyen de variation de la fréquence de commande fasse varier la fréquence de commande sur la base d'au moins un taux de réduction sélectionné parmi le taux de réduction de la tension d'alimentation et le taux de réduction de la tension de commande de l'actionneur piézoélectrique lorsque l'actionneur piézoélectrique commence à être actionné.

3. Appareil pour piloter un actionneur piézoélectrique selon la revendication 1 ou 2, **caractérisé en ce que** :
le moyen de variation de la fréquence de commande possède un moyen de détection de la différence de phase (123) pour détecter une différence de phase entre le signal d'attaque et le signal de détection, et un moyen de comparaison (124) pour comparer la différence de phase avec une différence de phase cible préréglée, et la fréquence de commande du signal d'attaque variant sur la base des résultats de comparaison de manière à ce que la différence de phase se rapproche davantage de la différence de phase cible.

4. Appareil pour piloter un actionneur piézoélectrique selon l'une quelconque des revendications 1 à 3, **caractérisé en ce que** :
le moyen de régulation fasse en sorte que le moyen de variation de fréquence fasse varier la fréquence de commande en utilisant, en guise de fréquence de départ, une fréquence supérieure à la fréquence nécessaire pour atteindre l'état de vibration cible.

5. Appareil pour piloter un actionneur piézoélectrique selon l'une quelconque des revendications 1 à 4, **caractérisé en ce que** :
le moyen de régulation possède une horloge (132) pour mesurer le temps nécessaire pour qu'au moins un type de tension, sélectionné parmi la tension d'alimentation et la tension de commande de l'actionneur piézoélectrique, chute en-dessous d'une tension d'arrêt de commande préréglée, et le moyen de régulation déterminant que le taux de réduction est supérieur au taux de réduction de référence lorsque le temps mesuré par l'horloge est plus court que le temps de référence préréglé.

6. Appareil pour piloter un actionneur piézoélectrique selon l'une quelconque des revendications 1 à 5, **caractérisé en ce que** :
le moyen de variation de la fréquence de commande possède un compteur bidirectionnel (126) et fait varier la fréquence de commande du signal d'attaque sur la base du comptage du compteur bidirectionnel; et
le moyen de régulation initialisant le comptage du compteur bidirectionnel et faisant de nouveau varier la fréquence de commande lorsque le moyen de régulation détermine que le taux de réduction d'au moins un type de tension, sélectionné parmi la tension d'alimentation et la tension de commande de l'actionneur piézoélectrique, est supérieur au taux de réduction de référence.

7. Appareil pour piloter un actionneur piézoélectrique selon l'une quelconque des revendications 1 à 5, **caractérisé en ce que** :
le moyen de variation de la fréquence de commande possède un circuit intégré et fait varier la fréquence de commande du signal d'attaque sur la base de la valeur de sortie du circuit intégré; et
le moyen de régulation déclenchant la valeur de sortie du circuit intégré et faisant varier la fréquence de commande une fois de plus lorsque le moyen de régulation détermine que le taux de réduction d'au moins un type de tension, sélectionné parmi la tension d'alimentation et la tension de commande de l'actionneur piézoélectrique, est supérieur au taux de réduction de référence.

8. Dispositif électronique, **caractérisé en ce qu'**il comprenne l'appareil pour piloter un actionneur piézoélectrique selon l'une quelconque des revendications 1 à 7, un actionneur piézoélectrique commandé grâce à l'appareil, et un source d'alimentation (9).

9. Dispositif électronique selon la revendication 8, **caractérisé en ce que** :
le dispositif est un article d'horlogerie électronique (1) comprenant un mécanisme d'affichage de date (10) entraîné par l'actionneur piézoélectrique.

10. Procédé de commande d'un dispositif électronique pour commander un dispositif électronique comprenant un actionneur piézoélectrique (A) ayant un vibreur qui vibre en raison de l'envoi d'un signal d'attaque ayant une fréquence de commande prescrite à l'attention d'un élément piézoélectrique, et une source d'alimentation (9) fournissant l'électricité à l'élément piézoélectrique du vibreur ; ledit procédé de commande d'un dispositif électronique **se caractérisant en ce qu'**il comprenne :
une étape de détection des vibrations pour détecter les vibrations du vibreur et émettre un signal de détection détectée ;
une étape de détection de tension pour détecter au moins un type de tension sélectionné parmi la tension d'alimentation et la tension de commande de l'actionneur piézoélectrique ;
une étape de variation de la fréquence de commande pour augmenter ou réduire la fréquence de commande du signal d'attaque par rapport à la fréquence de commande prescrite de manière à ce que l'état de vibration du vibreur, tel que détecté d'après le signal de détection, se rapproche davantage de l'état de vibration cible ; et
une étape de régulation pour faire revenir la fréquence de commande à la fréquence de commande prescrite et réaliser une autre étape de variation de la fréquence de commande sur la base du taux de réduction de tension tel que détecté lors de l'étape de détection de tension lorsque le taux de réduction est supérieur à un taux de réduction de référence préréglé.

11. Programme de régulation de commande pour un procédé de commande d'un dispositif électronique selon la revendication 8 afin de réguler la commande d'un dispositif électronique comprenant un actionneur piézoélectrique (A) ayant un vibreur qui vibre en raison de l'envoi d'un signal d'attaque d'une fréquence de commande prescrite à l'attention d'un élément piézoélectrique, et une source d'alimentation (9) qui fournit l'électricité à l'élément piézoélectrique du vibreur, ledit programme de régulation de commande pour un dispositif électronique **se caractérisant en ce qu'**un ordinateur fonctionne au moins en tant que moyen de régulation sélectionné parmi le groupe formé par :
un moyen de commande pour fournir le signal d'attaque à l'élément piézoélectrique du vibreur ;
un moyen de détection de vibrations pour détecter les vibrations du vibreur et émettre un signal de détection détectée ;
un moyen de variation de la fréquence de commande pour faire varier la fréquence de commande du signal d'attaque de manière à ce que l'état de vibration du vibreur, tel que détecté d'après le signal de détection, se rapproche davantage de l'état de vibration cible;
un moyen de détection de tension pour détecter au moins un type de tension sélectionné parmi la tension d'alimentation et la tension de commande de l'actionneur piézoélectrique ; et
un moyen de régulation pour faire en sorte que le moyen de variation de la fréquence de commande fasse varier la fréquence de commande de manière à ce que la fréquence de commande du signal d'attaque augmente ou diminue par rapport à la fréquence de commande prescrite, et fasse revenir la fréquence de commande à la fréquence de commande prescrite et réalise une autre étape de variation de la fréquence de commande sur la base du taux de réduction de tension tel que détecté par le moyen de détection de tension lorsque le taux de réduction est supérieur à un taux de réduction de référence préréglé.

12. Support d'enregistrement, **caractérisé en ce que** le programme de régulation de commande pour un dispositif électronique selon la revendication 11 soit enregistré d'une manière permettant à un ordinateur de lire le programme.
